(19) **Europäisches Patentamt / European Patent Office / Office européen des brevets**

(11) **EP 4 604 614 A1**

(12) **EUROPEAN PATENT APPLICATION**

(43) Date of publication:
20.08.2025 Bulletin 2025/34

(21) Application number: 24158421.8

(22) Date of filing: 19.02.2024

(51) International Patent Classification (IPC):
$H04W\ 36/00^{(2009.01)}$  $H04W\ 12/037^{(2021.01)}$

(52) Cooperative Patent Classification (CPC):
H04W 36/0038; H04W 12/037; H04W 36/0079;
H04W 36/06

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: **Panasonic Intellectual Property
Corporation
of America**
Torrance, CA 90504 (US)

(72) Inventors:
• DHANANJAYA, Harshith
63225 Langen (DE)
• KUANG, Quan
63225 Langen (DE)
• SUZUKI, Hidetoshi
Osaka, 571-8501 (JP)

(74) Representative: **Grünecker Patent- und
Rechtsanwälte**
PartG mbB
Leopoldstraße 4
80802 München (DE)

(54) **PDCP KEYSTREAM HANDLING FOR LOWER LAYER MOBILITY FAILURES TO ENSURE DATA SECURITY AND INTEGRITY**

(57)     Provided are a user equipment, a base station, and a handover method for LTM cell switching and LTM cell recovery. For example, the user equipment comprises: a transceiver, which, in operation, receives from a source cell an indication to switch from the source cell to a target cell, wherein the source cell and the target cell are operated by a first base station. The user equipment further comprises circuitry, which, in operation, performs an attempt to switch from the source cell to the target cell, the attempt to switch including: changing a count variable to a first value; and control the transceiver to transmit, via the target cell, to the first base station a switching completion message encrypted using the first value of the count variable. After determining a failure in the attempt to switch, the circuitry performs an attempt to recover to a candidate cell out of a set of preconfigured candidate cells operated by the first base station, the attempt to recover including: setting the count variable to a second value different from the first value; and control the transceiver to transmit, via the candidate cell, to the first base station a recovery completion message encrypted using the second value of the count variable.

Fig. 8

EP 4 604 614 A1

## Description

## BACKGROUND

### 1. Technical field

The present disclosure relates to wireless communication between a user equipment and wireless cells managed by base station, and in particular to handling cell switching and cell recovery. The present disclosure relates to apparatuses and methods for handling such cell switching and cell recovery.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

## SUMMARY

One non-limiting and exemplary embodiment facilitates intra-base station L1 L2-triggered mobility (LTM) cell switch operations.

In an embodiment, the techniques disclosed herein feature: A user equipment comprising: a transceiver, which, in operation, receives from a source cell an indication to switch from the source cell to a target cell, wherein the source cell and the target cell are operated by a first base station; circuitry, which, in operation, performs an attempt to switch from the source cell to the target cell, the attempt to switch including: changing a count variable to a first value; and control the transceiver to transmit, via the target cell, to the first base station a switching completion message encrypted using the first value of the count variable, and after determining a failure in the attempt to switch, performs an attempt to recover to a candidate cell out of a set of preconfigured candidate cells operated by the first base station, the attempt to recover including: setting the count variable to a second value different from the first value; and control the transceiver to transmit, via the candidate cell, to the first base station a recovery completion message encrypted using the second value of the count variable.

In an embodiment, the techniques disclosed herein feature: A user equipment comprising: a transceiver, which, in operation, receives from a source cell an indication to switch from the source cell to a target cell, wherein the source cell and the target cell are operated by a first base station; circuitry, which, in operation, performs an attempt to switch from the source cell to the target cell, the attempt to switch including: changing a count variable to a first value; control the transceiver to transmit, via the target cell, to the first base station a switching completion message encrypted using the first value of the count variable; and setting the count variable to a second value different from the first value; and after determining a failure in the attempt to switch, performs an attempt to recover to a candidate cell out of a set of preconfigured candidate cells operated by the first base station, the attempt to recover including: controlling the transceiver to transmit, via the candidate cell, to the first base station a recovery completion message encrypted using the second value of the count variable, wherein in case the attempt to recover fails, the circuitry, in operation, initiates a new cell search.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

## BRIEF DESCRIPTION OF THE FIGURES

In the following exemplary embodiments are described in more detail with reference to the attached figures and drawings.

**Fig. 1**      shows an exemplary architecture for a 3GPP NR system.

**Fig. 2**      shows exemplary functional split options in 5G O-RAN.

**Fig. 3**      illustrates the steps of a method for intra-CU cell handover according to prior art.

**Fig. 4**      illustrates the cell recovery using candidate cell 316 as target cell for the recovery, after the cell switch to target cell 314 failed.

**Fig. 5**      illustrates transmission of SRB1 by the UE to cell 2 selected for switch over and to cell 3 selected for cell recovery, which involves the entire L1-L2 stack, including entities of PHY, MAC, RLC, and PDCP.

**Fig. 6**      illustrates the stacks involved in the intra-CU LTM, with different number of entities used by the UE, the DU-cells, and the CU-gNB.

**Fig. 7**      illustrates the steps of a method for intra-CU cell handover according to prior art.

**Fig. 8**      illustrates the steps of a method for intra-CU cell handover and cell recovery using a cell-specific sequence count according to an embodiment of the present disclosure.

**Fig. 9**      illustrates an LTM configuration including LTM candidate cell configuration that each entail a cell specific sequence count according to an embodiment of the present disclosure.

**Fig. 10**      shows cells 1 to N+1 out of which N cells are LTM candidate cells which are operated by a first or second base station according to an embodiment of the present disclosure.

**Fig. 11**      illustrates an LTM configuration including LTM candidate cell configuration, with field seqConst carrying a common value for all LTM candidate cells according to an embodiment of the present disclosure.

**Fig. 12**      illustrates the steps of a method for intra-CU cell handover and cell recovery using a constant sequence count common for all LTM candidate cells according to an embodiment of the present disclosure.

**Fig. 13**      illustrates the steps of a method for intra-CU cell handover and cell recovery according to an embodiment of the present disclosure.

**Fig. 14**      illustrates the steps of a method for inter-CU cell handover and cell recovery according to an embodiment of the present disclosure.

**Fig. 15**      shows an exemplary architecture for a split gNB architecture.

**Fig. 16**      illustrates a general, simplified and exemplary block diagram of a user equipment, UE and a base station, gNB.

**Fig. 17a**      shows a functional structure of circuitry of a user equipment.

**Fig. 17b**      shows a functional structure of circuitry of a base station.

## DETAILED DESCRIPTION

*5G NR system architecture and protocol stacks*

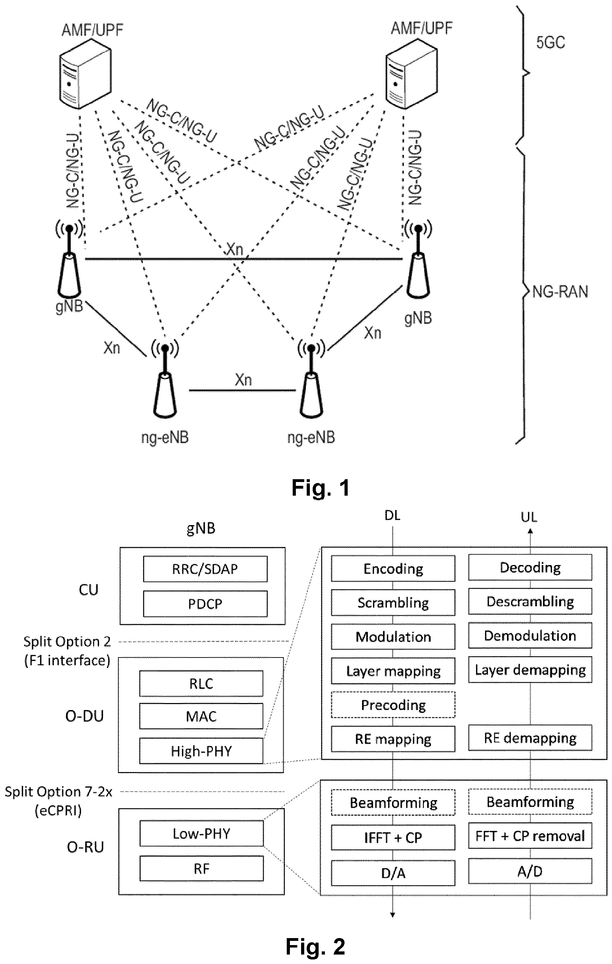

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4)

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels.

The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability ($1-10^{-5}$ within 1ms). Finally, mMTC may preferably require high connection density (1,000,000 devices/$km^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier, a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.2.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

*RRC connection setup and reconfiguration procedures*

Interactions between a UE, gNB, and AMF (an 5GC entity) in the context of a transition of the UE from RRC_IDLE to RRC_CONNECTED for the Non-Access Stratum (NAS) part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

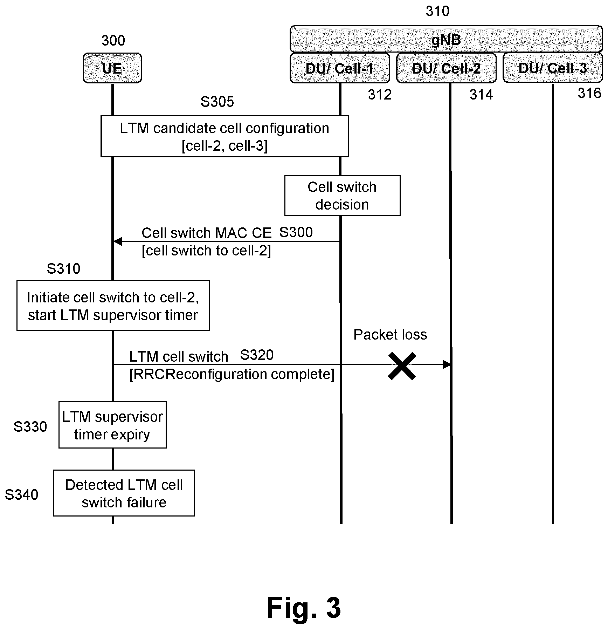

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to **Fig. 3.** The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

*Open-RAN*

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.

(1) Split Option 1: between RRC (radio resource control) and PDCP

(2) Split Option 2: between PDCP and RLC (High-RLC)

(3) Split Option 3: between High-RLC and Low-RLC

(4) Split Option 4: between RLC (Low-RLC) and MAC (High-MAC)

(5) Split Option 5: between High-MAC and Low-MAC

(6) Split Option 6: between MAC (Low-MAC) and PHY (High-PHY)

(7) Split Option 7: between High-PHY and Low-PHY

(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

FIG. 2 illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

*SBFD*

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided there between.

Further, sidelink transmission/reception may also be included as a transmission/reception direction in units of sub-bands which are the divided domains.

*XDD: Cross Division Duplex*

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided there between. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

*Control Signals*

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

*Terminal*

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as IoT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

*Base Station*

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

*Uplink/Downlink/Sidelink*

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

*Data Channels/Control Channels*

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

*Reference Signals*

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

*Time Intervals*

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

*Frequency Bands*

The present disclosure may be applied to any of a licensed band and an unlicensed band.

*Communication*

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.
In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

*Antenna Ports*

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

*Lower-layer triggered Mobility (LTM)*

Mobility support is a distinct feature of mobile networks which offers service continuity to moving UEs. When a UE moves from the coverage area of one cell to the coverage area of another cell, a handover process is initiated to change the serving cell for the UE. Handover (mobility) is a process of transferring an ongoing communication session of a user equipment (UE) from one cell (associated with base station or gNodeB (gNB)) to another cell in connected state. The primary motivation behind handover is to ensure seamless connectivity and continuity of service for the user, especially while the user is on the move.
In all the handover types until Release 17, a serving cell change is triggered by layer 3 (L3) measurements and is performed by RRC signaling (i.e., RRC Reconfiguration with a Synchronization information element) for change of primary cell (PCell) and primary secondary cell (PSCell). The serving cell change may be based on layer 3 (L3) measurements and radio resource control (RRC) signaling. All cases require reconfiguration of upper layers (e.g., RRC or PDCP) and/or resetting of lower layers (e.g., MAC and/or PHY) which leads to longer latency, larger overhead and longer interruption time than lower-layer or beam level mobility.

Release 18 has introduced lower layer mobility, namely layer 1 (L1) / layer 2 (L2) based mobility also known as lower layer triggered mobility (LTM) to enable a serving cell change via L1/L2 signaling, while keeping configuration of the upper layers and/or minimizing changes of configuration of the lower layers. This helps to reduce the latency, overhead and interruption time during handover. The LTM supports both intra-distributed unit (DU) and intra-central unit (CU)-inter-DU mobility. During the LTM, a user plane is continued whenever possible (e.g. intra-DU), without reset, with the target cell to avoid data loss and the additional delay of data recovery. Further, security is not updated in LTM.

Layer 2 mobility (LTM) can offer improvements in handover latency and interruption time compared to Layer 3 based mobility. However, LTM as introduced in Rel-18 also has a number of limitations compared to Layer 3 mobility. For example, LTM operation is only supported for mobility between cells of the same gNB.

**Fig. 3** illustrates an LTM for the case that DU cells are served by one base station gNB. In the example of **Fig. 3,** there are three DU cells 312, 314, and 314 that are served by gNB 310, where the user equipment UE 300 communicates with DU-Cell 1 312, i.e. Cell-1 312 is the serving cell for the UE 300.

While communicating with Cell 1, the UE 300 sends a measurement report messages to the gNB 310. Based on the latest measurement report message including information on the quality of the channel between the UE and Cell 1, the gNB decides whether an LTM should be initiated. In case, the gNB determines that, based on the measurement report message, the channel quality falls below a predefined threshold, the gNB decides to initiate a cell handover using LTM. For that purpose, the gNB prepares a list of LTM candidate cells that are suitable to ensure a more reliable communication with the UE. The list of LTM candidate cells may be pre-prepared by the gNB even if a cell handover may not been triggered. This means that the gNB prepares the LTM candidate list while the UE may move with the communication quality between the UE and Cell 1 still be of good quality and stable. This offloads the signalling messages from higher layers, like RRC, during handover execution and hence benefits the reduced latency during UE mobility. In **Fig. 3,** step S305 illustrates a procedure in which the UE 300 is notified by the gNB 310 of the LTM cell list. For example, this may be performed by an RRC configuration message. In the example of **Fig. 3,** the LTM candidate list includes cell-2 and cell-3. Alternatively, the gNB may prepare and provide the list of LTM candidate cells at the instant of the gNB determining that LTM shall be triggered for cell handover. The cell that the UE initially (i.e. before handing over) communicates with is typically referred to as a source cell. In turn, any cell among the list of LTM candidate cells may be referred to as a candidate cell. A target cell is a cell to which a handover is attempted.

In the procedure S305, the gNB transmits an RRCReconfiguration message to the UE including the configuration of one or more LTM candidate cells. The RRCReconfiguration message is transmitted in a layer above the PDCP, in this case the RRC layer. The UE stores the configuration of LTM candidate cell(s).

Each of the DUs 312-316 (i.e. Cell-1 to Cell-3) of the gNB 310 knows the LTM candidate cell list, as they obtain the configuration from the gNB over their interface to the gNB. In the example of **Fig. 3,** Cell-1 is the source cell which sends an indication of cell switch in a MAC Control Element (MAC-CE) to the UE, thereby triggering the cell switch (step S300). This means that the DUs consisting of L1 and L2 layers, may make handover decisions without intervention from the central unit (CU), where the RRC layer is located. As a result, handover decisions may be performed faster and reduces the mobility latency.

In the example, said indication indicates to UE to switch to Cell-2. Upon reception of said indication, the UE initiates the switch to Cell-2 as the target cell in **Fig. 3.** The UE then starts a LTM supervisor timer (step S310) and transmits an RRCReconfigurationComplete message to the gNB over cell-2 (step S320). The UE stops the timer, if the LTM cell switch was successful (not shown in **Fig. 3**). The success of the switching may be detected at the UE. For instance, based on an uplink (UL) or downlink (DL) grant or the like. The timer has a predefined expiry time defining a time window for performing the cell switch. Due to real-time variations of the channel between the UE and Cell-2 and/or network conditions, the LTM switch may not be successful. If the UE does not receive a response to the transmitted RRCReconfiguration-Complete message (indicated by "packet loss" in **Fig. 3**) before the timer expiry (step S330), the UE detects a failure of the LTM cell switch (step S340).

In case of failure of the LTM handover (i.e. cell switch failure), the UE could initiate an RRC connection re-establishment procedure upon time expiry. However, the RRC re-extablishment is time/resource consuming. Thus, at RLF (Radio Link Failure) recovery or LTM cell switch failure, a fast recovery to one of the candidate cells may be more suitable.

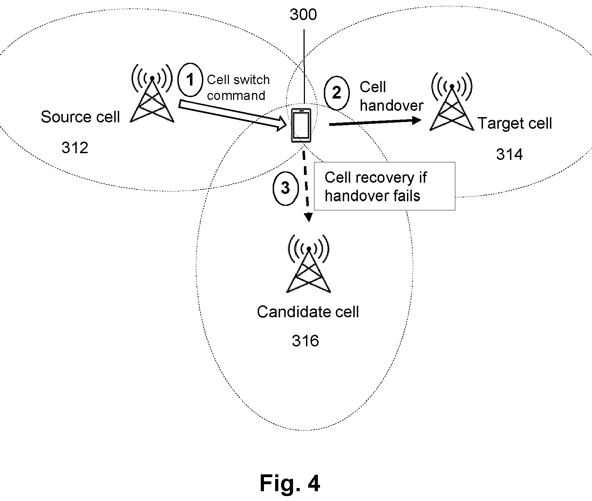

In the example of **Fig. 3,** the recovery is to be performed to candidate Cell-3 which is another candidate cell in the pre-configured (in step S305) LTM list. This is depicted in **Fig. 4,** with the source cell 312 being the source cell that transmitted the indication for cell switch to the UE, while cells 314 and 316 are candidate cells as part of the LTM cell list. Here, the selected candidate cell for the cell switch is cell 314 being the target cell. In turn, cell 316 is the candidate cell for recovery. For cell recovery, the UE sends another RRCReconfigurationComplete message to the gNG over the candidate cell 3. Similar to Conditional Handover (CHO) detailed below, the LTM recovery is performed quickly in that after failure of switching to a target cell: (1) the UE selects another cell in the list of candidate cells, (2) the UE performs a RACH-based LTM cell switch on the selected cell (network controlled) if the selected cell is an LTM candidate cell, and (3) the UE transits an RRC re-establishment request if the selected cell is not an LTM candidate cell.

The UE transmits the RRCReconfigurationComplete message on a signaling radio bearer 1 (SRB1). In general, SRBs are used or transmission of signaling messages like RRC messages or NAS messages between the UE and base station. A DRB is a radio bearer dedicated to carrying user data between the UE and the base station. Unlike SRBs, DRBs are established on-demand to transmit user data when needed. Specifically, SRB1 is dedicated to a single UE and it carries dedicated RRC signaling messages such as RRC connection setup complete, RRC connection re-establishment complete, RRC connection re-configuration complete etc. Once the AS security is activated, all the signaling messages over this bearer will be security and integrity protected. During LTM cell switch operation, the RRCReconfigurationComplete message is transmitted on the SRB1 of the target cell 314, i.e. applied to the target cell's SRB1 configuration. During LTM recovery operation, the RRCReconfigurationComplete message is transmitted on the SRB1 of the selected recovery candidate cell 316, i.e. applied to the new candidate cell's SRB1 configuration. In general, UE changing (or switching) from the source cell to the candidate cell involves re-establishing existing SRBs or data radio bearers (DRBs) and their corresponding logical channels linked to the radio using the new entity configurations. This may involve the entire L1-L2 stack such as, PHY, MAC, RLC and PDCP entities to be reestablished as per the target cell configurations. However, for intra-CU LTM cell switch or recovery (within a gNB), where the central unit (CU) is common between source cell and the LTM candidate cells, re-establishing only PHY, RLC and MAC layers could suffice, while the PDCP entity could be reused. Reusing entity parameters is termed as re-configuration, where the existing parameters are fully or partially reused. This may enable a faster cell handover and recovery within a gNB, mainly focusing on time redundancy of generating new security key for encryption and integrity.

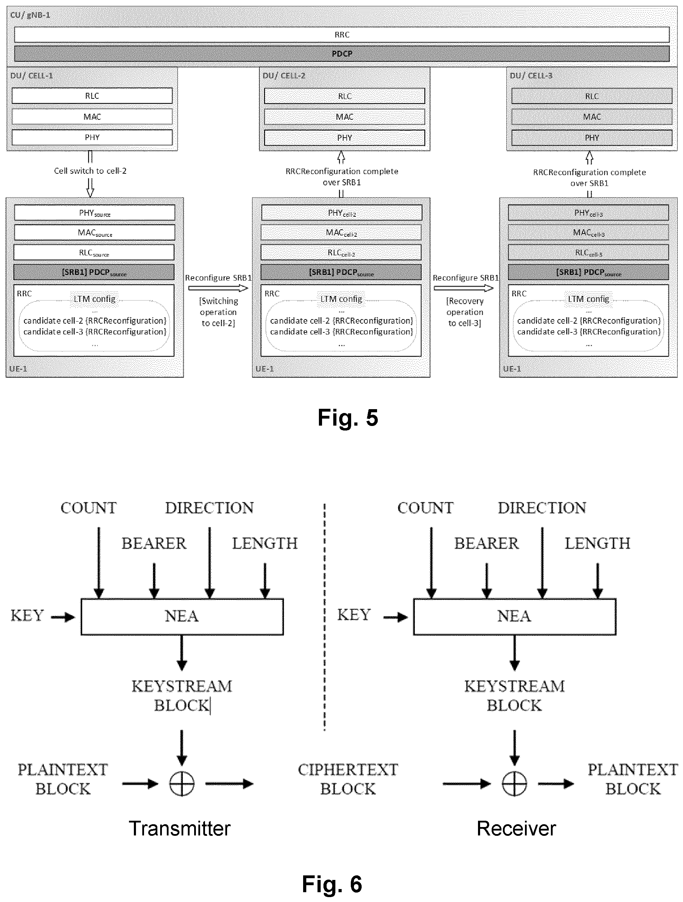

**Fig. 5** illustrates, for the case of one base station gNB operating three intra-CU cells 1 to 3 and serving a UE. As shown, the UE uses four L1/L2 entities (PHY, MAC, RLC and PDCP) for sending SRB1 to to the CU/gNB. In this example, SRB1 is received by the gNB using the three entities (PHY, MAC, RLC) of the CU cells and the two entities (PDCP, RRC) of the gNB (also referred to as split architecture). Therefore, the intra-CU cells 1 to 3 transport (in terms of the OSI layer hierarchy) the SRB1 to common PDCP entity, which may be reusable when performing cell switching or cell recovery. In the following, PDCP entity for transmission is discussed with further details provided in Section 5.2.1 of 3GPP TS 38.323 (Release 17 - V17.5.0).

PDCP layer provides security in terms of integrity protection and ciphering. Integrity protection is provided by calculating an authentication code which is appended to the packet as header information (MAC-I filed). This authentication code is used by the receiver to verify that the packet is genuine, and has not been inserted by an intruder. Ciphering is applied to the payload of each PDCP packet after the authentication code has been calculated. Ciphering scrambles the sequence of bits to make the packet unreadable unless the receiver knows the ciphering key to reverse the scrambling. The PDCP also adds header information which includes the PDCP sequence number that may be used for packet reordering at the receiver. A value of COUNT is a concatenation of a hyper frame number and a PDCP sequence number. It is used to identify a respective PDCP packet.

- TX_NEXT is a state variable associated with the COUNT and used for transmission packets at the UE, i.e. used for UL transmission. Correspondingly, RX_NEXT is a state variable associated with a COUNT for reception packets at the UE, i.e. used for DL reception. The packets in UP and DL are numbered separately.

- Data blocks submitted to PDCP entity (from higher layers, such as RRC for control plane and other protocols of the user plane such as IP or the like) are subjected to procedures like, encryption, integrity MAC-I computation, PDCP header insertion, etc., all of which use TX_NEXT (associated with COUNT) value along with other internal state variables to process the incoming data blocks, before submitting them to the lower layers.

- TX_NEXT value (corresponding to the associated COUNT) is incremented by one immediately, and after receiving a (next incoming) data block, said data block is processed with the current value of TX_NEXT. In this way, the PDCP entity is prepared for the next incoming data block. In other words, the value of the TX_NEXT value or the associated COUNT indicates the number of the next transmission, which still needs to be performed.

RRC messages conveyed through signalling radio bearer SRB1 are also subjected to encryption and integrity protection algorithms on the PDCP layer.

- A ciphering algorithm for encryption utilizes some of the internal state variables, such as COUNT, DIRECTION, LENGTH, and BEARER ID along with a ciphering KEY. These internal state variables have the following meaning:

- As already mentioned above, COUNT refers to a non-cyclic counter variable which consists of hyper-frame numbers in the most significant bits (MSB) and a PDCP sequence number in the lowest significant bit (LSB). The MSB and LSB have together a size of 32 bits.

- DIRECTION refers to the direction ID that is used by the PDCP entity. When DIRECTION is set to '1' for UL transmission and the UE transmits to the base station. When DIRECTION is to '0' for DL, the base station transmits to the UE.

- LENGTH refers to the length of the currently processed data block.

- BEARER ID are the LSB 5 bits of the logical channels identifiers (LCID) as specified in TS 38.321 (Release 17 -- V17.07).

In a detailed aspect, these state variables are required for keystream block generation. Such keystream is used to encrypt the data transmitted to be next by scrambling as mentioned above.

• Integrity protection schemes also utilize the COUNT state variable for its algorithm.

Hence, both ciphering and integrity protection employ same state variables (in part or all), those common state variables (e.g. COUNT) should be handled on the same footing.

The COUNT value is used to generate a keystream as is illustrated in **Fig. 6.** Ciphering involves XOR operation of the PDCP entity input block (plaintext block) operated along with a newly generated keystream block. Integrity and ciphering keys (KEY) are generated or changed upon reception of reconfiguration with a synchronization procedure, only if 'masterKeyUpdate' IE (information element of the RRC protocol) is included into the RRC reconfiguration message. In an intra-cell CU cell switch, it is not preferred to generate new keys (i.e. KEY). Generation of new keys requires additional time which delays the next transmission / reception.

In **Fig. 6,** the keystream may be generated using the Nokia (protected trademark) Encryption Algorithm (NEA) adopted in the current NR specifications. In order to ensure a high level of security of the data, it is desirable to generate a new and unique keystream block to encrypt every new transmission block. In principle, if a keystream 'k' is reused to cipher two different plaintext messages, 'm' and 'n', then the encrypted texts $[k \oplus m]$ and $[k \oplus n]$ can be XORed together to generate the resultant $[m \oplus n]$. By using the result $[m \oplus n]$, one could further break down and get the original messages 'm' and 'n'. As a result, the user is exposed vulnerable security attacks as well. In order to achieve uniqueness with the keystream block generation, the message counter state variable called COUNT is maintained for a particular radio bearer of each transmission direction independently. It has been agreed upon that it is not allowed to use the same COUNT value more than once for a given security key (details may be found in 3GPP TS 38.331: Section 5.3.1.2 of Release 17 - V17.07). Since the COUNT variable is 32 bits long and defined to be non-cyclic, the range of values is expected to be more than sufficient for an average UE active session time.

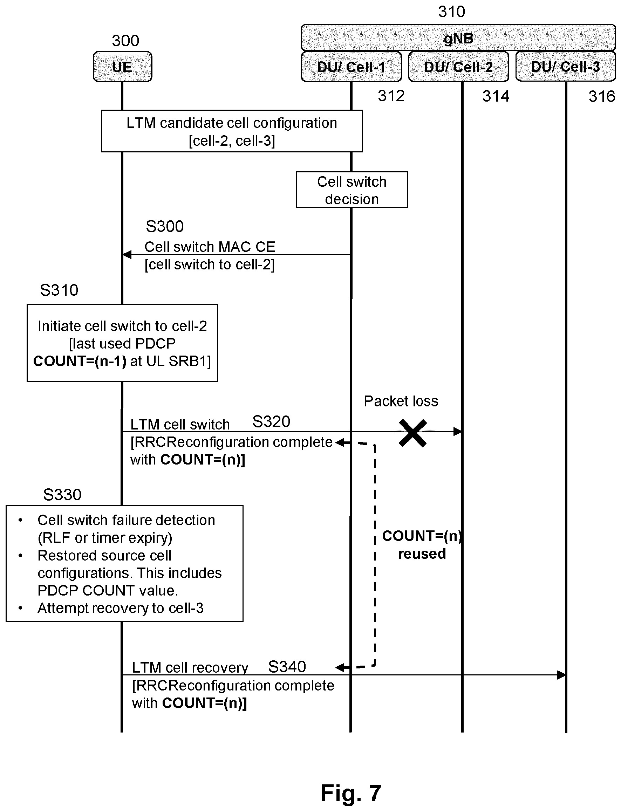

**Fig. 7** illustrates a scenario in which the reuse of COUNT value may occur. In particular, applying legacy PDCP operation for intra-CU LTM, the RRCReconfiguration complete message sent upon cell switch operation is processed on SRB1 PDCP entity with the reused parameters of the source cell. It is noted that the same reference numerals are used as in **Fig. 3** as they refer to the same steps, and their description is not repeated. As shown, the TX_NEXT associated COUNT variable is incremented (COUNT = (n-1) $\rightarrow$ COUNT = (n)) as soon as the RRCReconfiguration complete message is transmitted in step S320, and ready to be used for the new transmission. As shown in Step S310, the last used PDCP COUNT value before the RRC message transmission was assumed to be n-1. Hence, with a new value for the COUNT as input to the NEA in **Fig. 6** (COUNT is kept in TX_NEXT at the UE for UL), a new and unique keystream block is generated for encryption. In this case, no keystream issue is observed for the cell switch operation. Also, as per the legacy handover procedure, if the cell switch is not successful, the PDCP entity used towards the target cell may not be required for further transmissions, because the target cell 314 is an intra-CU cell. Therefore, the target cell PDCP entity may be discarded, so that the SRB1 PDCP entity parameters get restored or reverted to the source cell parameters (here: source cell 312), as maintained before the cell switch operation. Consequently, when the new RRCReconfiguration complete massage is processed on SRB1 entity the during cell recovery operation in steps S330 and S340 (i.e. LTM cell recovery for Cell-3 as selected candidate), the source cell SRB1 parameters are used or re-configured for the second time. This means that TX_NEXT associated COUNT variable gets reused (see step S340), so that the same keystream is used or generated. The keystream reusage may be exemplified as follows:

• The first RRCReconfiguration complete message in step S320 on SRB1 at cell switch operation uses COUNT=(n), incremented from the last used value COUNT=(n-1). In the example of **Fig. 7,** the source cell is DU cell 312. The first RRCReconfiguration complete message on SRB1 is send by the UE 300 to DU cell 314 (step S320) in response to the UE 300 receiving from the source cell 312 an indication for cell switch in a MAC CE (step S300).

- Upon cell switch failure by the UE 300 (step S330), the value of COUNT is reverted to COUNT=(n) instead of increasing it to COUNT=(n+1), as per legacy handover that includes the use of restored source ell configurations. In response to the detected cell switch failure, the UE initiates a cell recovery. In the example of **Fig. 7,** the cell selected by the UE as recovery cell among the candidate cells is cell 316.

- As a result, the new RRCReconfiguration complete on SRB1 sent by the UE 300 towards DU cell 316 that is a recovery candidate cell also uses COUNT=(n) (step S340).

Hence, as may be discerned from **Fig. 7,** when the PDCP entity is re-configured as per legacy handover procedure applied to LTM, the same keystream that has been already used in transmission of previous data is used. To re-emphasize, keystream re-usage may occur if the NEA in **Fig. 6** takes the same COUNT value as input, with the KEY value (and other parameters) being maintained as explained before. Thus, different data (i.e. plaintext block) are ciphered / encrypted with same keystream block, resulting in security vulnerability of the user data. An attempt to solve the problem may be regenerating a new keystream block by not repeating the COUNT value.

However, it remains an open problem how to perform reconfiguration of the PDCP entity to achieve this during the LTM recovery applied to one or more candidate cells, with the entity being re-configured so as to be used within the same gNB. Moreover, the PDCP entity reconfiguration needs to be reconfigured under the conditions that updated state variables (e.g. TX_NEXT reflecting the COUNT) need to be synchronized between the transmitter (e.g. the UE) and the receiver (e.g. gNB handling multiple DU cells). It is noted that the same problem exists when the LTM procedure is extended to inter-CU (or multiple gNBs) candidate cells, in which case a solution should be applicable for a combination of an intra-CU and inter-CU setup.

The present disclosure addresses a situation where a UE 300 performs, in case of switching from a source cell to a target cell, cell recovery to a candidate cell without re-using the same COUNT value.

*Embodiments*

The present disclosure addresses a situation where a user equipment, UE performs an LTM intra-gNB cell switch and/or an inter-gNB cell switch in conjunction with cell recovery.

In the following, UEs, base stations, and procedures will be described for the new radio access technology envisioned for the 5G mobile communication systems, but which may also be used in LTE mobile communication systems, 6G mobile communication systems and other wireless or wired communication system. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE and the base station is typically standardized and may be defined by different layers, such as PHY, MAC, RRC etc. (see above background discussion).

The present disclosure relates to a UE, a base station, and methods of a UE and a base station that address LTM for cells operated by the same gNB.

*Embodiment 1*

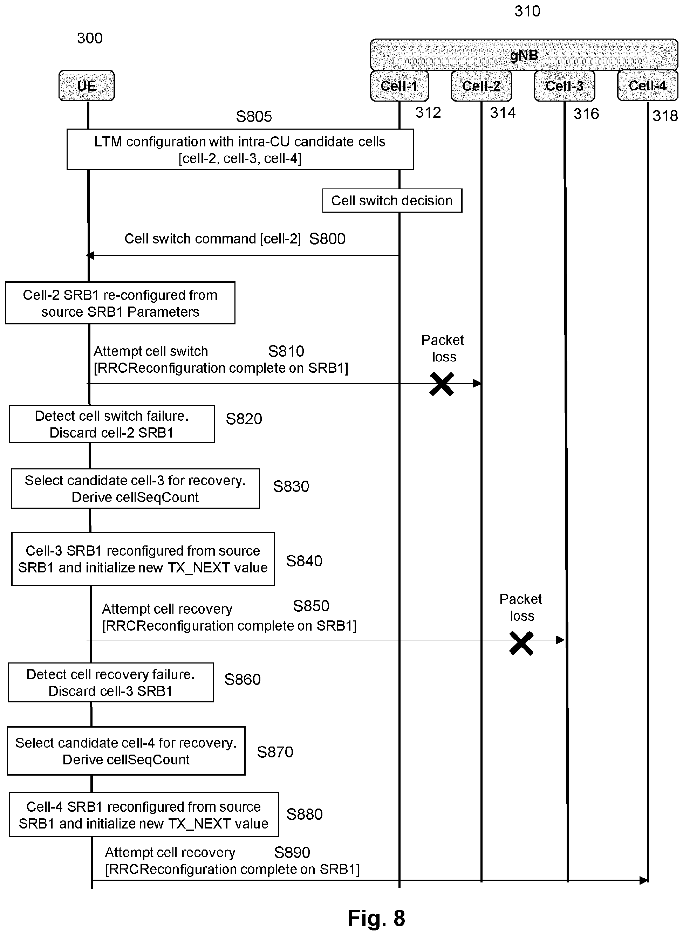

**Fig. 8** illustrates an overview of a method for intra-gNB cell switching and cell recovery. The gNB 310 may be referred to as first base station in general or as a network node. The present disclosure is not limited to 3GPP systems. Since the present disclosure is readily applicable to 3GPP NR architecture, in the specific examples though, reference is made to the features of the 3GPP NR.

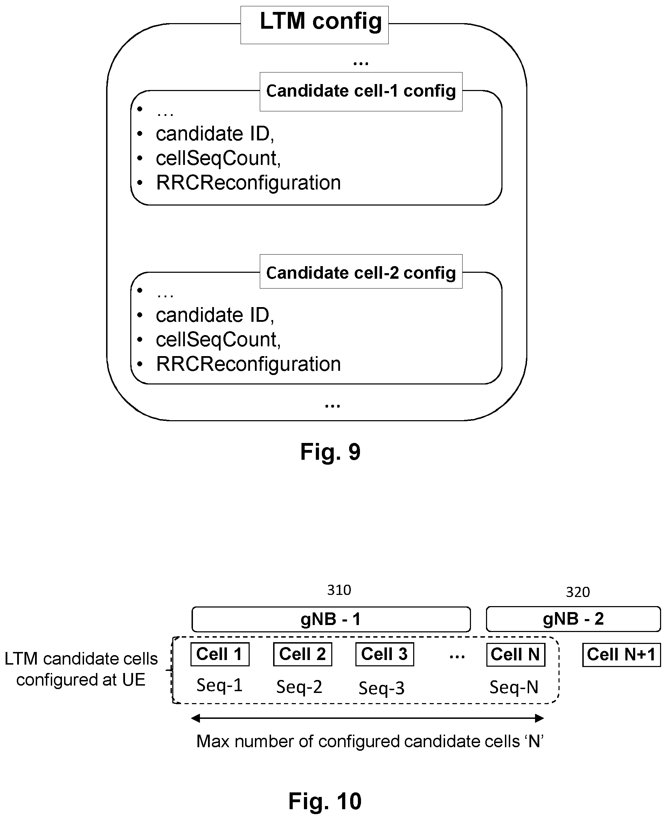

In the example of **Fig. 8,** gNB 310 manages four cells 1 to 4. The four cells 312 to 318 are thus intra-CU cells. The UE communicates with the gNB via cell 1 that is the source cell. Cells 2 to 4 may be candidates for cell switching (i.e. candidate cells or target cells for cell switching). The UE may be configured with an LTM configuration with the intra-CU candidate cells in step S805. The candidate cells may be determined by the gNB which also prepares (and transmits to the UE) the LTM configuration of the CU candidate cells. As shown in **Fig. 9,** the LTM configuration includes a candidate cell ID and RRC configuration for the respective candidate cell.

The respective source cell is capable of making a decision whether or not a cell switch is needed, which may be performed based on a measurement report of the UE or an own measurement performed at the DU and/or a gNB. In case a cell switch is assessed as needed (e.g. at the DU pertaining to cell 1), the source cell 1 transmits a cell switch command to the UE (step S800). Said command includes an indication to switch from the source cell (e.g. cell 312) to a target cell (e.g. cell 314) which is one of the candidate cells. The indication may comprise the target cell identity as a parameter signaled explicitly or being determined according to a same approach at the transmitter and receiver.

The indication to switch may be provided from the serving cell on a Medium Access Control (MAC), layer; e.g. within a MAC-CE (MAC control element). In the example of **Fig. 8,** the serving cell is the source cell 312. Upon receiving the cell switch command by UE 300, the UE uses the SRB1 parameters of the source cell 312 to re-configure the SRB1 parameters for the target cell, i.e. cell 314. In step 810, the UE makes an attempt for cell switching by changing a COUNT variable (e.g. the TX_NEXT or RX_NEXT) to a first value. For example, the COUNT variable may be changed by one, from a value n-1 to n, with n being an integer equal to 1 or larger than 1. The UE then transmits via the target cell (e.g. cell 2) an RRCReconfiguration complete message to the first base station gNB. The RRCReconfiguration complete message may refer to a switching completion message which is encrypted on PDCP layer using the first value of the count variable. While this example refers to RRCReconfiguraion complete message which is already defined in the RRC of 3GPP NR. The present disclosure is not limited thereto. In general, any completion message that indicates to the gNB that the cell switch has been finalized, may be transmitted.

In case the UE detects a failure of the attempted cell switch from source cell 312 to target cell 314 (step S820), the SRB1 for cell 2 is discarded, and the UE attempts a cell recovery. In other words, the UE attempts to recover a link by switching to a candidate cell out of a set of preconfigured candidate cells. It is noted that the recovery is done to a candidate cell which the UE selects, e.g. based on own measurements or the like.

In the example of **Fig. 8,** such candidate cell may be cell 3 selected by UE 300. The UE sets the count value to a second value different from the first value.

In this example, a cell sequence count, cellSeqCount is a part of the COUNT value maintained in the UE in the state variable TX_NEXT (step S830) and that changes to produce said second value. The UE uses the SRB1 parameters of the source cell 312 to re-configure the SRB1 for the selected candidate cell 3. The UE transmits an RRCReconfiguration complete message on said SRB1 for the recovery attempt (step S850) via the candidate cell 3 to the first base station gNB 310. The RRCReconfiguration complete message refers to a recovery completion message which is encrypted using the second value of the count variable. In **Fig. 8,** the UE sets the TX_NEXT value which is associated with the COUNT to the second value different to the first value. The TX_NEXT value (first value) may already have been used during the cell switch operation. Hence, setting the TX_NEXT to a different value (second value) avoids possible reusing of the COUNT. According to the embodiment, the second value may be a value that is correlated with an identity of the selected candidate cell, i.e. cell 3 in the example of **Fig. 8.** The second value of the count value may be the identity of the candidate cell or a value derived from the identity. In other words, the count value is unique to the recovery cell. In specific exemplary implementations, the cellSeqCount used to generate the count value is cell specific.

In order to enable integrity protection and ciphering at the UE and the BS, both the UE and the BS should keep track of the current count value. As mentioned above, UE keeps track of the count value by maintaining a state variable TX_NEXT (for uplink) and RX_NEXT (for downlink). The base station may, correspondingly to the UE, set the second value of the count value for the target cell.

However, the present disclosure is not limited to deriving the count value from the cell identity. In an exemplary implementation, the identity of the candidate cell may be a "candidate ID" of the specific cell that is included in the configuration of the candidate cells in S805 as shown schematically in **Fig. 9. Fig. 9** illustrates an information element of an RRC configuration message that includes a list of available cells, comprising the intra-CU cells (cells operated by the same BS). For each cell, a candidate ID is assigned. Therefore, the second value of a candidate cell and/or for candidate cells may be pre-configured by the gNB.

Provision of cell-specific count value enables the BS to set a correct count value, synchronous with the UE. Without such cell distinguishing count value, the BS would not know how many unsuccessful attempts for switch/recovery were undertaken by the UE and thus, would not be able to synchronously set the second value. Here, a UE may try recovery to a candidate cell for a plurality of times after a failed switching attempt. It may be desired to restrict the attempts for recovery so that each cell may be only attempted once.

**Fig. 8** exemplifies a scenario, where the recovery to cell 3 fails as detected by the UE (step S860), which discards the SRB1 for cell 3 that the UE selected as the recovery candidate cell. With the recovery failed, the UE makes a second recovery attempt in that a candidate cell 4 for recovery is selected from the candidate cells, and derives a cellSeqCount, having a value different from the value derived for the recovery on cell 3 (as well as different from the first value applied for the switching attempt). As before, the UE uses the SRB1 parameters of the source cell 312 to re-configure SRB1 but now for the selected candidate cell 318. A new TX_NEXT value is set, capable of identifying the selected cell 4. The UE transmits an RRCReconfiguration complete message on SRB1 via cell 4 to the gNB. The RRCReconfiguration complete message refers to a recovery completion message that is encrypted using the most recently determined count value, corresponding to the new TX_NEXT value (step S890). The encryption may be performed on Packet Data Convergence Protocol (PDCP) and the RRCReconfiguration complete message (i.e. completion regarding switching and recovery) may be transmitted to gNB 310 (first base station) via Radio Resource Control (RRC) protocol.

According to the embodiment, the second value of the count variable may be cell specific as mentioned above. The second value (and any further value in case the recovery fails and is retried with another candidate cell) may be derived from the count value of the source cell by adding a cell specific sequence count, cellSeqCount to the count value *COUNT_source_entity* of the source cell (applied before the attempt to switch cells):

$$COUNT\_recovery = COUNT\_source\_entity + cellSeqCount$$

In other words, the COUNT_recovery value refers to the second value (for cell 3 recovery in **Fig. 8**) or the new value (for cell 4 in **Fig. 8**) of the count variable.

Hence, with the cell specific candidate IDs for the cell candidates and included in the LTM configuration, the candidate ID may be the cellSeqCount or may be used to generate the cellSeqCount, rendering the COUNT_recovery value unique and specific to the candidate cell.

Alternatively, a new information element (IE) may be added to the candidate configuration list as illustrated in **Fig. 9** with the added IE being the cellSeqCount. In this case, the cellSeqCount may be directly , rather than derived from the candidate cell ID. The value of the cellSeqCount may be uniquely assigned by a network to each candidate cell within the LTM candidate configuration shared to the UE. In other words, said second value (or any further value set for further recovery attempts) of the count variable is a value configured for the candidate cell by the base station before receiving said indication to switch. The value configured for the candidate cell differs from the candidate cell ID. For example, the UE may receive (over the transceiver at the circuitry) from the BS a configuration message (e.g. over RRC) comprising a list of configuration entries for respective candidate cells. An entry of the specific cell may comprise a cell identity. Moreover, the entry may further comprise the second value, i.e. the value (cell SeqCount) to be used to obtain the count value (or which is directly the count value).

In **Fig. 8,** the recovery to cell 4 being successful is reflected in that there is no recovery failure (no packet loss) at cell 318 (step S890). Hence, the LTM recovery process is completed, in which case the value of the count variable (corresponding to COUNT value or COUNT_recovery value) that were used for any of the candidate cells' recovery is not permitted to be reused. Accordingly, a count value should be set which differs from count values that would be set for any of the cells pertaining to the same gNB.

According to the embodiment, after determining that the attempt to recover to the candidate cell was successful, the count value is changed to a third value that is calculated based on a maximum value of identity of a candidate cell among identities of respective candidate cells within the set of preconfigured candidate cells. In this way, irrespectively of which recovery attempt is successful (e.g. recovery to cell 3 or to cell 4), after a successful attempt a new and not yet used count value is selected.

In the example of **Fig. 8,** with cell 4 being the last cell selected as recovery cell, this means that the respective cell specific COUNT_recovery value used to send the recovery completion message (i.e. RRCReconfiguration complete message) on SRB1 via cell 4 to the gNB is not to be reused. The same applies in case the recover to cell 3 were successful. This may result in a count sequence gap after the cell recovery is completed, while the normal data communication between the UE and network is resumed. The gap originates because a set of COUNT sequences, i.e. values of cell specific cellSeqCount values that correspond to unique second values of the count variable are always reserved for the configured candidate cells.

Said third value of the count variable after successful recovery may be obtained, for example, according to:

$$COUNT\_initial = COUNT\_base\_entity + totalCandidateCell + 1$$

wherein COUNT_initial refers to the count variable. The variable COUNT_base_entity refers to the value of the COUNT of the source cell 312 triggering the cell switch. The *totalCandidateCell* refers to a maximum value of identity of a candidate cell among the preconfigured candidate cells. Adding "+1" changes the count variable to a value that is different from the COUNT_recovery value, i.e. the COUNT value used in the LTM recovery, irrespectively of the number of recovery attempts before the success. The UE may obtain the totalCandidateCell by counting the candidate cell containers in the configuration to obtain this total value.

For example, candidate list configuration may include three cells with the cell IDs 2 to 4. In a first example, cellSeqCount for cell 1 is 1, cellSeqCount for cell 2 is 2, cellSeqCount for cell 3 is 3, and cellSeqCount for cell 4 is 4. The totalCandidateCell may be set to 4, by counting the cells in the list (also including cell 1).

Alternatively, the third value of the count variable may be changed by using the total number of candidate cells that the gNB preconfigured (signaled) for LTM. For example, totalCandidateCell may be provided explicitly as a separate IE within the LTM configuration structure from the gNB to the UE.

So far, the processing of the UE has been detailed. The base station gNB 310 performs a corresponding processing in that the gNB receives from the source cell a notification that the UE is to perform an attempt to switch from the source cell to a target cell. In **Fig. 8,** such notification (not shown) is send by cell 312 to gNB 310 upon deciding to perform a cell switch. The gNB changes a count variable to a first value and receives via the target cell a switching completion message that is encrypted using the first value. It is noted that the gNB uses as count variable COUNT. After determining a failure in the switch attempt, the gNB sets the count variable to a second value different from the first value. Subsequently, the gNB receives from the UE via a candidate cell a recovery completion message that is encrypted using the second value. The candidate cell is out of a set of preconfigured candidate cells which are operated by the base station gNB. Please note that the gNB and the UE set, during the cell switch and/or cell recovery, their respective count variable in a synchronized manner. As a result, the values of the count variable (e.g. COUNT, COUNT_recovery, COUNT_initial) have the same values.

In the above embodiment, the cell switch and cell recovery have been discussed for cells (i.e. source cell and candidate cells) that are intra-CU cells, which are operated by a common base station gNB. **Fig. 10** illustrates a scenario where there is a first base station gNB 310 and a second base station gNB 320 different from the first base station. There are N+1 cells, among which cells 1 to N refer to LTM candidate cells and (pre-)configured by respective sequence values 1 to N (i.e. cellSeqCount) values used to set the count variable. Cells 1 to N-1 are operated by the first base station 310, while cells N and N+1 are operated by the second base station. However, in this example, cell N is a pre-configured candidate cell for LTM. In case of cell switch or cell recovery from one gNB-CU (first base station gNB 310) to a different gNB-CU (second base station gNB 320), the PDCP entity may need a re-configuration, where the ciphering keys (KEY mentioned above and shown in **Fig. 6**) are changed. In such a case, all the state variables get reset, including the COUNT value. The COUNT value is set to zero or to its initial value, which generates a new keystream during encryption. There are scenarios where the reusability issue re-occurs in the case where the inter-CU LTM attempt fails and the next candidate cell is selected for the LTM recovery:

- The selected candidate cell belongs to the later gNB (e.g. second base station). Here, the initial value setting is already used once. This is because the UE performs the cell switch, for example in **Fig. 10,** from cell 2 of first base station gNB 310 to cell N of second base station gNB 320, where the COUNT value has been already initialized as part of the cell switch attempt. Hence, the same COUNT value is used for the cell recovery attempt, causing the reuse of same keystream.

- The selected candidate cell belongs to the source cell gNB-CU, the PDCP entity from the source cell is required again (intra-CU mobility).

Hence, in cases where LTM cell switch or cell recovery is performed with intra-CU and inter-CU LTM being combined, multiple PDCP entities should co-exists and be applied as base entries. As a result, the source PDCP entity with the last updated state variables should be used as base entity for intra-CU LTM, and Inter-CU PDCP entity with the initial state variables should be used as base entity for inter-CU LTM. This means that LTM cell switch and/or LTM cell recovery is possible between cells that are inter-CU cells.

According to the embodiment, more generally, the second value of the count variable is further correlated with a first base value that is the first value in case of an attempt to recover to a candidate cell operated by the first base station. In case of an attempt to recover to a candidate cell operated by the second base station, the second value is further correlated with a second base value different from the first base value. For example, the second value may be correlated with a COUNT base entity of a candidate cell operated by the first base station gNB 310. The COUNT base entity may then refer to the COUNT value (i.e. first base value) set for the selected intra-CU candidate (intra-CU LTM). In turn, the second base value may be the COUNT value (i.e. second base value) set for the candidate cell operated by the second base station gNB 320. It is noted that the second value of the count variable may still be set in a cell-specific manner as already discussed above. Hence, with deriving a specific cellSeqCount value for the candidate cell by using the candidate ID, the second value of the count variable may be calculated as follows:

$$COUNT\_recovery = COUNT\_base\_entity + cellSeqCount$$

This calculation applies for intra-CU cells and inter-CU cells. As noted earlier, the value of cellSeqCount may be in the sequence range of '1' to 'max configured candidate cells'. In case of N LTM candidate cells as shown in **Fig. 10**, 'max configured candidate cells' would be N.

The cases of intra-CU LTM and inter-CU LTM still may need to be differentiated. This may be realized by using the key update request (RRC reconfiguration request with synchronization) or a 'masterKeyUpdate' that is provided within the LTM candidate configurations. A respective RRCReconfiguration IE is sent in the RRCReconfiguration message according to Release 15 - V15.30. When 'masterKeyUpdate' is requested, the inter-CU PDCP base entity is applied. In other words, above value of COUNT_base_entity refers to the second value of the count variable set for a candidate cell operated by second base station gNB 320.

In the following, an exemplary RRC syntax is shown merely for exemplary and non-limiting purposes. Accordingly, an IE RRCReconfiguration that may be carried in an RRC reconfiguration message includes a masterKeyUpdate that carries a keySetChangeIndicator indicating whether or not the master key has changed.

```
RRCReconfiguration-v1530-IEs ::= SEQUENCE {
    …
    masterKeyUpdate           MasterKeyUpdate        OPTIONAL, -- Cond
    …
}


MasterKeyUpdate ::= SEQUENCE {
    keySetChangeIndicator   BOOLEAN,
    ...
}
```

In case the LTM cell recovery is successful, the count variable may be changed in the same manner as already discussed above, and is applicable for intra-CU cell LTM and inter-CU cell LTM. This implies that the count variable is initialized (COUNT_initial) using the COUNT_base_entity which may be the COUNT_Source_entity if the candidate cell is an intra-CU cell. Otherwise, COUNT_base_entity is the value of the count variable set for the inter-CU cell candidate.

According to the embodiment, the LTM recovery procedure may be applicable to one or more cells and to intra-CU and inter-CU L1-L2 triggered mobility cell switch and recovery procedures.

*Embodiment 2*

As discussed in embodiment 1, the LTM cell switch and cell recovery may be applicable for more than one cell switch and cell recovery, since a cell specific sequence count 'cellSeqCount' is derived for one or more LTM candidate cells. Embodiment 2 provides for an efficient cell switch and cell recovery, which is executed once.

In embodiment 2, the second value of the count variable is a constant for all the candidate cells, with said constant being an integer greater than zero. The same constant value may be applicable for one or more candidate cells within the set of preconfigured candidate cells. This means that still multiple candidate cells may be preconfigured by the gNB for cell switch or cell recovery, but the cell switch or cell recovery may be performed once. Moreover, the updated PDCP entity COUNT value that is applied on the first UL data sent toward any of the selected recovery candidate cell remains the same.

The UE performs only a single attempt to recover to a candidate cell before initiating a new cell search (one-short cell recovery). Hence, upon triggering the LTM recovery procedure, either for intra-CU or inter-CU, using the sequence constant value, namely 'seqConst', the new PDCP entity gets initialized with TX_NEXT of the next usable COUNT value using the following expression applied on source entity for intra-CU LTM or the inter-CU entity for different CU LTM, here calling as the base entity.

$$COUNT\_new\_entity = COUNT\_base\_entity + seqConst$$

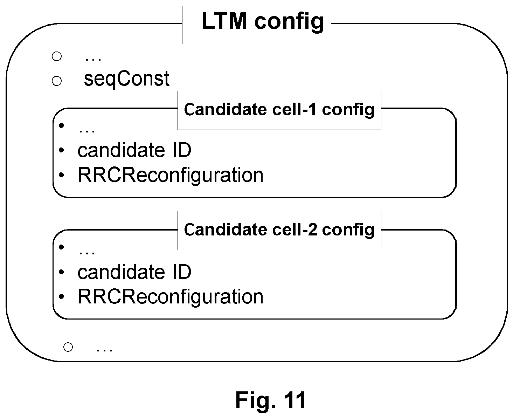

The constant i.e. seqConst may be a fixed value that is specified by a convention or may be a value configured by the first base station before the indication to switch is received. For example, the convention may defined in a technical documentation. Alternatively, LTM configurations that are sent by the first base station to the UE during the LTM procedure may include an additional field that describes the constant value. For example, **Fig. 11** illustrates an LTM configuration, where the constant value is signaled via seqConst. Contrary to the LTM configuration of **Fig. 9** where each of the candidate cell configuration has an additional field for the cell specific second value 'cellSeqCount', the respective field for the constant 'seqConst' is outside of any of the candidate cell configuration. As a result, the constant is common to all candidate cells, and hence is not cell specific.

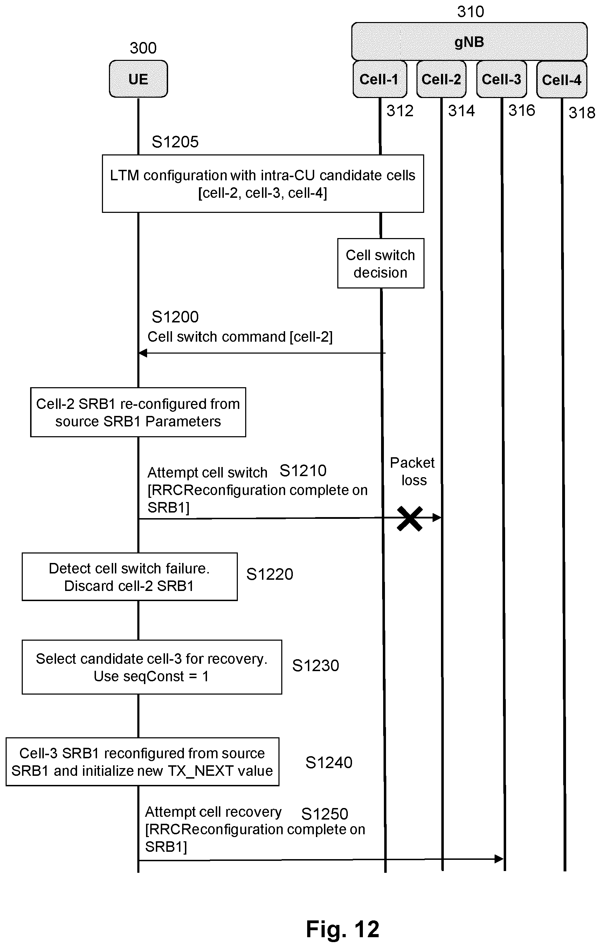

**Fig. 12** illustrates the steps of LTM recovery where the count variable is set to a constant, so that the recovery - if triggered - may be performed once. In the example of **Fig. 12,** the base station gNB 310 operates four cells 312 to 318, so that the cells are intra-CU candidate cells. Cell 312 is the source cell that communicates with the UE 300. As already discussed, the gNB may pre-configure a set of LTM candidate cells including one or more cells in the LTM configuration. In the example shown, there are three intra-CU cells 314 to 318 configured as LTM candidates. Upon the gNB 310 deciding for cell switch, the gNB transmits via the source cell 312 a cell switch command to UE 300 (step S1200). The cell switch command indicates to the UE to switch from the source cell to a target cell. In the example, the indication refers to cell 2 being the target cell. Upon reception of the cell switch command by UE 300, the UE reconfigures the SRB1 for cell 314 from the SRB1 parameters of the source cell 312. As mentioned before, the indication to switch is provided on the MAC layer from the serving cell. In step S1210, the UE attempts a cell switch to the target cell and transmits via the target cell 314 to the gNB an RRCReconfiguration complete message (i.e. a switching completion message) on SRB1. The switch completion message may be transmitted via RRC to the gNB 310 (first base station). As the packet gets lost at the target cell, the UE detects a failure of the cell switch (step S1220) and discards the SRB1 of the target cell 314. Since the UE knows the LTM configuration that includes configuration of candidate cells, the UE selects a candidate cell out of the set of candidate cells for recovery. Here, the UE selects among cells 2 to 4, cell 3 as candidate cell for the recovery. The UE sets in step S1230 the second value of the count variable to seqConst, which is equal to a constant of '1'. It is noted that, for the case of seqConst being the smallest number, i.e. '1', the new value of the COUNT variable is equivalent to the next incremented value of COUNT. Hence, alternatively, the PDCP entity reconfigured for LTM recovery procedure will increment the COINT to the next value. Since cell 3 is an intra-CU candidate, the UE uses for the base entity *COUNT_base_entity* the value of the count variable of the source cell, i.e. cell 1. It is noted that, in case of inter-CU LTM and the LTM target cell was an LTM candidate cell of a second base station different from the first base station gNB 310, the UE may use the value of the COUNT variable of the target cell. In step S1240, the UE reconfigures the SRB1 for the recovery cell 316 from the SRB1 parameters of the source cell 312, and initialized a new TX_NEXT value. This means that TX_NEXT associated with the COUNT value is initialized by adding the constant value seqConst = '1' to *COUNT_base_entity* = *'COUNT_source_entity.* In step S1250, UE 300 then performs an attempt for recovery and transmits via LTM candidate cell 316 to gNB 310 an RRCReconfiguration complete message (i.e. a recovery completion message), which is encrypted on PDCP using the second value of the count variable. The recovery completion message may be transmitted via RRC to the gNB 310 (first base station). After successful LTM recovery, the PDCP entity needs to be re-configured with a new COUNT value that is initialized for the normal data usage. Hence, after the UE determines that the recovery attempt was successful, the count variable is changed to a fourth value obtained by incrementing the second value. In the example of **Fig. 12,** seqConst was '1', so that, after incrementing the value, the new COUNT value is initialized as:

$$COUNT\_initial = COUNT\_base\_entity + 2$$

Incrementing seqCount by '1' is a non-limiting example, and other increment values are suitable as long as the resulting incremented value is larger than the constant seqConst. Alternatively, the count variable may be changed to a fifth value that is a fixed value being specified by a convention or is a value configured by the first base station before receiving the indication to switch. In this case, the COUNT value may be initialized as:

$$COUNT\_initial = COUNT\_base\_entity + initConst$$

where initConst refers to the fifth value being larger than the constant seqConst (i.e. second value). The convention may be a technical documentation or the like.

According to the embodiment, the LTM recovery procedure using a constant seqConst common for all LTM candidate cells minimizes the COUNT sequence gap after the LTM procedure is successful. Moreover, the configuration of the cell-specific configuration of COUNT including the derivation effort for the second value at the UE and network side may be reduced. With limiting the LTM recovery to one recovery attempt, the time to which the UE may initiate the RRC re-establishment procedure and perform a new cell search may be reduced.

*Embodiment 3*

In embodiments 1 and 2, different values of the count variable are used in case of cell switching or cell recovery. In particular, the count variable is changed to the first value in case of cell switching, while the count variable is changed further in case of failed cell switch triggering cell recovery. Noteworthy, the count variable is changed to the second value different from the first value after detection of cell switch failure. In other words, a new value of the count variable is derived, after switch failure detection. The derivation of said second value may be performed multiple times in case multiple recovery attempts are possible as shown for embodiment 1 in **Fig. 8** (steps: S830, S840 (attempt 1) and S870, S880 (attempt 2)) or once in case of a single recovery attempt as shown for embodiment 2 in **Fig. 12** (steps: S1230 and S1240).

In this embodiment, the PDCP entity used towards the source cell transmission is not reconfigured during progressive cell switch and cell recovery process. Referring to the above mentioned examples, the PDCP entity in the first UL data transmission executed on intra-CU cells and further recovery-related transmissions continues using all its internal state variables without modification, i.e. as per the PDCP entity transmission procedure, referred to in TS38.323 section 5.2.1 (Release 17 - v17.5), until the end of LTM procedure is complete, i.e. until a the gNB-CU receives the completion message or until the new cell search is initiated.

For example, according to the PDCP entity transmission procedure, the TX_NEXT associated COUNT value is incremented for the next transmit block, while the current data block is submitted to the lower layers. Analyzing the PDCP entity state variables during the cell switch operations reveals:

(1) The TX_NEXT associated COUNT value from the source cell PDCP entity is incremented and ready for new transmission, which is used for cell switch operation's first UL data to the target cell.

(2) The PDCP entity transmission during cell switch operation has the same procedure, where the TX_NEXT associated COUNT value is incremented again and prepared for the next data block transmission.

(3) When LTM recovery is triggered, it is safe and correct to use the parameters from the target cell PDCP entity instead of reusing the source cell PDCP entity, which is the cause of keystream reuse issue.

Ideally, for LTM cell switch or LTM recovery procedure of intra-CU candidate cells, the same PDCP entity could be continued without having to re-configure as seen in the legacy case. Hence, either for cell switch procedure or cell recovery procedure executed towards intra-CU cells, the UE may not need to restore or re-configure SRB1 to transmit its corresponding first UL data. It is possible that the network could construct the RRCReconfiguration message within each candidate cells configured at the UE, without the PDCP re-configuration information, when the cells are applicable within the same CU. The RRCReconfiguration message may include only the RLC, MAC, and PHY re-establishment information.

Unlike embodiments 1 and 2, where the UE performs the PDCP entity handling during first UL transmission of both intra-CU and inter-CU LTM, in embodiment 3 the network structures the PDCP entity re-configuration only for inter-CU cells and not for intra-CU cells, during LTM candidate configurations.

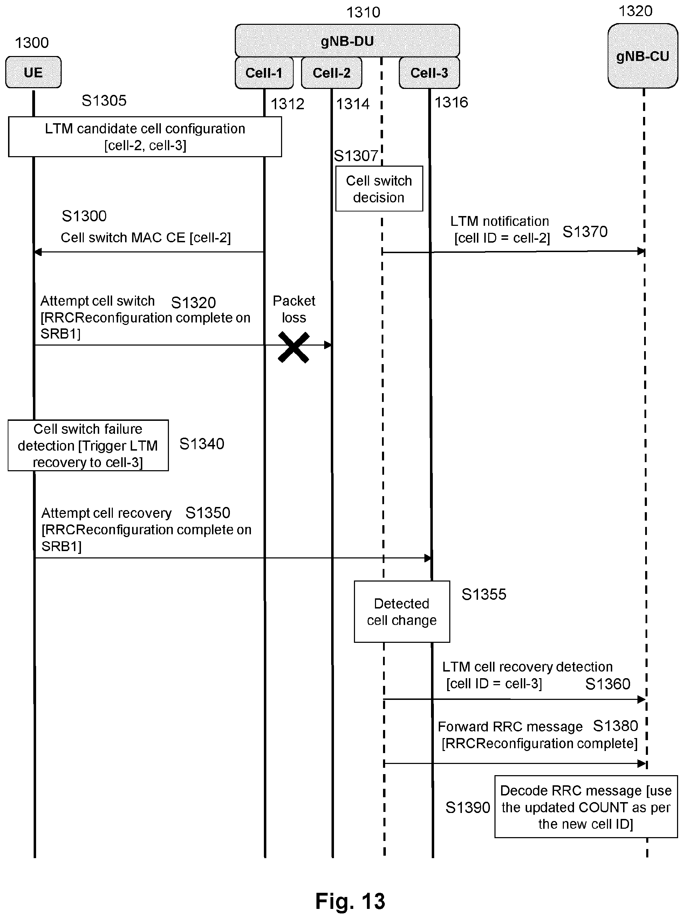

**Fig. 13** illustrates the steps for LTM recovery for intra-DU cells applicable for one cell switch and one cell recovery. The setup is similar to **Fig. 8** and **Fig. 12,** where a first base station gNB 1310 operates three cells 1312 to 1316 (intra-DU cells). In this scenario, exemplarily, the three cells belong to the same gNB-DU. However, in general, this is not necessary and the present disclosure works for any intra-gNB handover (switching), irrespectively of gNB-DU/CU architecture. UE 1300 communicates with one of the intra-cells, namely in this example cell 1 that is the source cell. **Fig. 13** shows in step S1305 the message exchange including receiving by the UE from the gNB over cell 1 the candidate cell list. It is noted that the LTM configuration shared with the UE in step S1305 does not necessarily include the PDCP re-configuration information before the decision on the cell switching. It is possible for gNB to provide the UE with the PDCP re-configuration information, e.g. including the candidate cell list, only after the cell switch decision is made in step 1307. Then this is also valid with the applicable network (gNB-DU and gNB-CU) architecture and operations for the preceding embodiments.

The gNB-DU makes a cell switch decision in step S1307 to switch from the source cell 1312 (cell 1) to one of the LTM candidate cells 1314 and 1316. In the example, the LTM candidate cell 1314 (cell 2) is the target cell for the cell switch.

The gNB-DU 1310 (in its capacity of controlling cell 1) further transmits an LTM notification on the ID of the target cell 1314 (cell 2) to the gNB-CU 1320 (step S1370). In general, the source cell informs the gNB-DU operating the source cell that a switch to a specific target cell (e.g. cell-2) also operated by the gNB-DU will be attempted.

The source cell transmits a cell switch command in a MAC control element and has an indication for the UE to switch from the source cell to the target cell (step S1300). Step S1320 may be performed before, after, or at the same time as step S1370, in general.

The gNB 1320 increments (changes from previous value) the count variable to a first value before step S1370. This may be done when preceding PDCP packet is received (in UL, the uplink count). The gNB 1320 (in particular the gNB-CU that implements the PDCP entity) will use the first value after receiving the switch indication in step S1370. This incrementing of the first value is similar as in preceding embodiments.

Upon receiving the cell switch command from the gNB-DU over the source cell 1312 in step S1300, the UE 300 performs an attempt to switch from the source cell 1312 to the target cell 1314 in step S1320. The UE also transmits to the target cell 1314 an RRCReconfiguration complete message (switching completion message) that is encrypted using the first value of the count variable (step S1320).

Thus, in case the RRCReconfiguration complete message (switching completion message) arrives correctly, both the UE and the gNB-CU have the same, first value of the count variable.

However, **Fig. 13** shows another scenario, in which the RRCReconfiguration complete message transmitted over the target cell 1314 is not received at the gNB-DU (and consequently at the gNB-CU either). This is illustrated by referring to "packet loss" in step S1320. In step S1340, UE 300 detects failure of the cell switch, which triggers an LTM recovery. As mentioned above, the detection of failure may be performed by setting a timer upon sending the RRCReconfiguration complete message and determining failure upon expiry of the timer.

In the above-described embodiments 1 and 2, the UE sets the count value for cell recovery to the second value (e.g. by correlating with cell identity in embodiment 1 or by setting to a constant common for all LTM candidate cells in embodiment 2) after detecting a failure in cell switching.

In the present embodiment 3, the count value (i.e. the second value that was set immediately after/with step S1320) is maintained when the failure is detected at the UE in step 1340. The UE selects cell 3 as LTM candidate for recovery, and performs a recovery attempt for candidate cell 1316 (step S1350). Said recovery attempt includes the UE transmitting via the candidate cell 1316 and the gNB-DU 1310 to the gNB-CU 320 an RRCReconfiguration complete message (recovery completion message), which is encrypted using the second value of the count variable.

In case the cell recovery fails (determined e.g. by the timer expiry), the UE initiates a new cell search. This is not shown in **Fig. 13.** Then, the gNB-DU 1310 and/or gNB-CU 1320 do not successfully receive the recovery completion message and conclude that the UE is about to initiate a new cell search.

If the cell recovery is successful, the gNB-CU 1320 receives via the candidate cell 1316 and the gNB-DU 1310 the recovery completion message. In particular, the gNB-DU 1310 receives the encapsulated recovery completion message over the candidate cell-3 in step S1350 and detects thus the cell change in S1355.

Following the cell change detection S1355, the gNB-DU transmits an LTM cell recovery detection message to the gNB-CU 1320 to inform the gNB-CU of the ID of the recovery cell, here cell-3 (step S1360). Further, the gNB-DU forwards the recovery completion message (RRCReconfiguration complete) to the gNB-CU (step S1380), which uses the second count value to decode the RRCReconfiguration complete message (step S1390).

According to this embodiment, the count value increments of the PDCP entity applied for one cell switch (increment to the first value) and one LTM recovery attempt (increment to the second value) are synchronized between the UE and the network. In the example of **Fig. 13**, said network includes a distributed unit of the base station gNB-DU 1310 and a control unit of the base station gNB-CU 1320. The distributed unit gNB-DU 1310 informs the control unit gNB-CU 1320 on the ID of the target cell selected for the cell switch via LTM notification message (S1370) and on the ID of the candidate cell selected for the recovery via the LTM cell recovery detection message (S1360) followed by the forwarded recovery completion message (S1390). Beyond that, the network (or gNB-CU as the gNB corresponds to a network node) may not be aware of the number of increments applied by the UE when receiving the PDCP packets for transmission, e.g. in case the recovery would be attempted a plurality of times so that a respective plural RRCReconfiguration complete messages would need to be sent. Hence, this embodiment works well for up to one LTM recovery attempt after cell switch failure.

The RRCReconfiguration complete message (switching completion message or recovery completion message) may refer to a candidate cell RRCReconfiguration message (received from gNB by the UE beforehand), including the 'RadioBearerConfig' IE which is an information element of the RRC protocol concerning radio bearer configuration. Said IE may be defined for SRB1 as the radio bearer and is used by the UE during cell switch or cell recovery. This IE may inform the UE in different ways to not re-configure the PDCP entity:

- Option 1: 'srb-ToAddModList' optional field is not included (or omitted) for SRB1 in RadioBearerConfig IE config.

- Option 2: 'reestablishPDCP' and 'pdcp-Config' optional fields are not included (or omitted) for SRB1 in srb-ToAddModList.

When the UE encounters Option 1 or Option 2, the UE may not need to re-configure the SRB1 entity (or act upon the currently established SRB1). Instead, the UE continues with the same entity for cell switch and cell recovery process.

An exemplary RRC syntax is provided in the following:

```
RRCReconfiguration-IEs ::= SEQUENCE {
    radioBearerConfig    RadioBearerConfig        OPTIONAL, -- Need M
    ...
}
```

```
RadioBearerConfig ::= SEQUENCE {
 srb-ToAddModList        SRB-ToAddModList          OPTIONAL, -- Cond HO-Conn
    ...
}
```

```
SRB-ToAddMod ::= SEQUENCE {
    srb-Identity              SRB-Identity,
    reestablishPDCP           ENUMERATED{true}      OPTIONAL, -- Need N
    discardOnPDCP             ENUMERATED{true}      OPTIONAL, -- Need N
    pdcp-Config               PDCP-Config           OPTIONAL, -- Cond PDCP
    ...
}
```

Some elements of above RRC syntax have the following meaning:

- A RadioBearerConfig configures SRBs (signaling radio bearer) for control signals and DRBs (data radio bearer) for data communication, established between the UE and the network.

- A SRB-ToAddModList refers to a configuration being included to either add a new SRB, or to modify the existing SRB according to the latest channel requirements. It may be a list of one or more SRB config info.

- An SRB-Identity refers unique identity to each of the SRB included in the list.

- A reestablishPDCP refers to an indication to re-establish the existing PDCP entity associated with SRB identity.

- A discardOnPDCP indicates that PDCP should discard stored SDUs and PDUs and resume transmissions upon the new incoming SDUs.

- A PDCP-Config refers to a configuration to add new PDCP entity or modify existing PDCP entity associated with the SRB identity, with the updated configurations.

The intended method for not re-configuring SRB1 as per Option 1 or Option 2 may be specified in a conditional description of a corresponding field, for example, within the '--Cond HO-Conn' field description for Option 1, and in '--Cond PDCP' description for Option 2. Accordingly, SRB1 would be conditionally not (re)configured for intra-CU candidate cells, or in other words conditionally (re)configured only for inter-CU candidate cells, while configuring UE with LTM candidate cells in the RRC configuration in step S1305 for the said embodiment 3.

According to embodiment 3, the count variable is changed to a first value and subsequently to a second value different from the first value before detection of cell switch failure, applicable for intra-CU cells. To apply cell switch or cell recovery to one of the inter-CU candidate cell, a new PDCP entity may be established along with the new set of keys derived for encryption and integrity. Since the number of synchronized LTM recovery attempts is limited to one, the combination of LTM operations with at least one inter-CU LTM involved is as seen below.

(1) Intra-CU cell switch followed by inter-CU cell recovery.

(2) Inter-CU cell switch followed by intra-CU cell recovery.

(3) Inter-CU cell switch followed by inter-CU cell recovery.

When the combinations of intra-CU and inter-CU LTM cases are involved, multiple PDCP entities must co-exist, and the corresponding entity is continued wherever applicable. For example, a Source PDCP entity is continued for intra-CU LTM and an inter-CU PDCP entity is continued for inter-CU LTM. The UE may apply the corresponding entity by differentiating the intra-CU and inter-CU gNB cases, using the key update request or 'masterKeyUpdate' provided within LTM candidate configurations. When 'masterKeyUpdate' is requested, then inter-CU PDCP entity is established once for the first attempt and is continued for the subsequent attempts. Otherwise, the source PDCP entity is continued.

**Fig. 13** has been described above to illustrate embodiment 3. However, it is noted that **Fig. 13** shows an exemplary gNB architecture, the corresponding message flow and network actions that are also applicable to embodiments 1 and 2 described above. For instance, the UE behaviour (steps S1305, S1300, S1320, S1340, S1350) may correspond to the UE behaviour described with reference to **Fig. 8** or **Fig. 12** (respective steps S805, S800, S810, S820-S840, and S850; similarly steps S1205, S1200, S1210, S1220-S1240, and S1250). The network behaviour (gNB-CU) shown in **Fig. 13** is also applicable to embodiments 1 and 2 with the difference on how the second value is set.

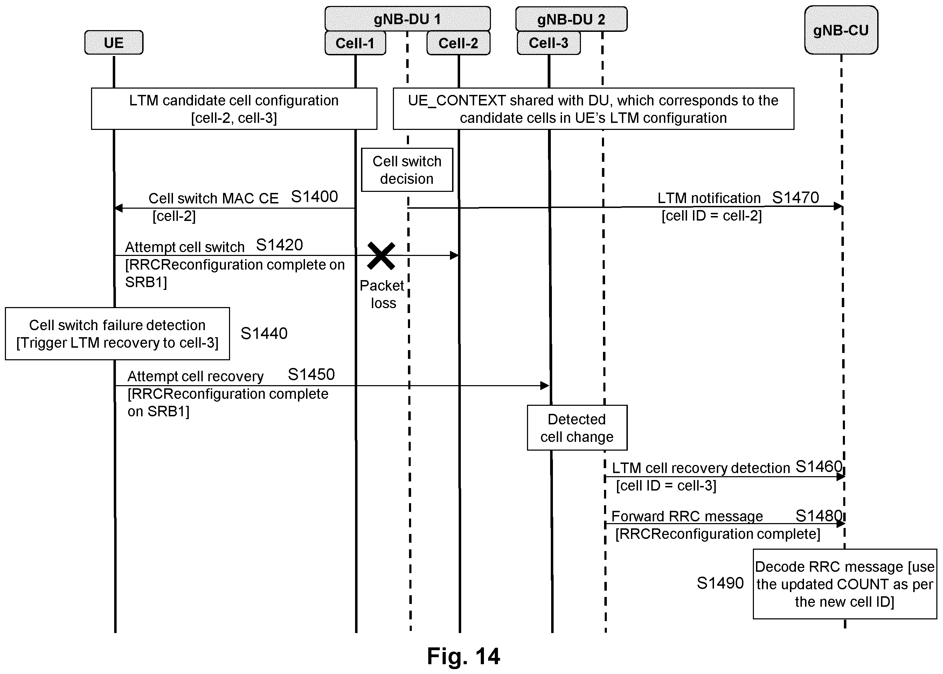

**Fig. 14** shows the steps for cell switch and cell recovery for an intra-CU scenario, where the cell switch is intra-DU LTM and the cell recovery is inter-DU LTM. The architecture scenario of **Fig. 14** is applicable to any of the above mentioned embodiments 1 to 3.

Some steps are similar as those of the intra-CU/intra-DU scenario in **Fig. 13,** and hence are not further detailed. In Fig. **14,** there is a first distributed unit gNB-DU1 and a second distributed unit gNB-DU2 both of which are controlled by a central unit (CU) gNB-CU. The first distributed unit gNB-DU1 operates two intra cells 1 and 2 (intra-DU cells of the first gNB-DU1), while the second distributed unit gNB-DU2 operates one intra cell 3. The UE is provided with LTM candidate cell configuration of cells 2 and 3 that serve as target cells for the cell switching or as candidate cells for cell recovery. It is noted that the LTM candidate cells entail cells, which are operated by the first distributed unit gNB-DU1 and the second distributed unit gNB-DU2, respectively.

In **Fig. 14,** the UE communicates with cell-1 (source cell). Upon the first distributed unit gNB-DU1 deciding on cell switching, the source cell 1 sends to the UE a cell switch command to switch from the source cell to a target cell (step S1400). Here, the target cell is cell 2 operated by the first distributed unit gNB-DU1. Hence, the cell switch is an intra-DU cell switch. Upon the UE detection failure of the cell switching, the UE selects (here: the UE picks the one remaining LTM candidate cell) candidate cell 3 as candidate cell for recovery. As mentioned, cell 3 is operated by the second distributed unit gNB-DU2. Therefore, the cell recovery is inter-DU but still intra-CU cell recovery in this example.

As already discussed in embodiment 1, whether the cell switching or cell recovery is inter-CU or intra-CU may be differentiated by the 'masterKeyUpdate' provided in the LTM candidate configurations. If provided, then inter-CU case is indicated, and the initial COUNT value (e.g. COUNT_interCU_entity) of a gNB-CU different from the gNB-CU of **Fig.14** is used for the COUNT_base_entity. Otherwise, the COUNT_base_entity is the COUNT_source_entity of the source cell (intra-CU). In **Fig. 14,** the source cell would be cell 1.

The RRCReconfiguration complete message for LTM recovery that is sent by the UE with an updated count value is received at the peer PDCP entity in the network for decoding. In **Fig. 13** and **Fig. 14,** said peer PDCP entity is the base station control unit gNB-CU. The network cannot decode this RRC message unless it is deciphered with the correct count value in the PDCP layer, which may depend on the cell ID from where the received packet has arrived over the radio link as in embodiment 1, but it does not necessarily depend on the cell ID if the number of recovery attempts is restricted as in embodiments 2 and 3 and in a case where a new message is used for the recovery detection indicated to the gNB-CU. In another exemplary implementation, when same LTM notification message is used for cell switch notification and cell recovery detection indication message which is sent to gNB-CU as per steps S1370 and S1360 in **Fig.13,** then cell ID included in LTM notification may be used to differentiate the progressive change of LTM operations (change of cell recovery from cell switch operation) as applicable to embodiment 1 to 3. This routing information about the cell ID within a split gNB architecture is available at the gNB-DU, where one or more cells are deployed and operated in a radio access network (RAN).

In the example of **Fig. 14,** the cell switching fails (steps S1400, S1420, S1440). Cell recovery is then performed (S1450), including transmission of RRCReconfiguration complete message. The encapsulated message is detected (e.g. on MAC layer) at the gNB-DU2 ("Detected cell change"). The gNB-DU2 then notifies the gNB-CU of the detected cell change (S1460) by sending a LTM cell recovery detection message including cell ID of cell-3.

Following this notification, the gNB-DU2 then forwards to the gNB-CU in step S1480 the RRCReconfiguration complete message (received in step S1450). The received message is decoded (deciphered using the count value) in step S1490. It is noted that the message flows shown in **Fig. 13** and **Fig. 14** are only exemplary and that the present disclosure is not limited to such specific details.

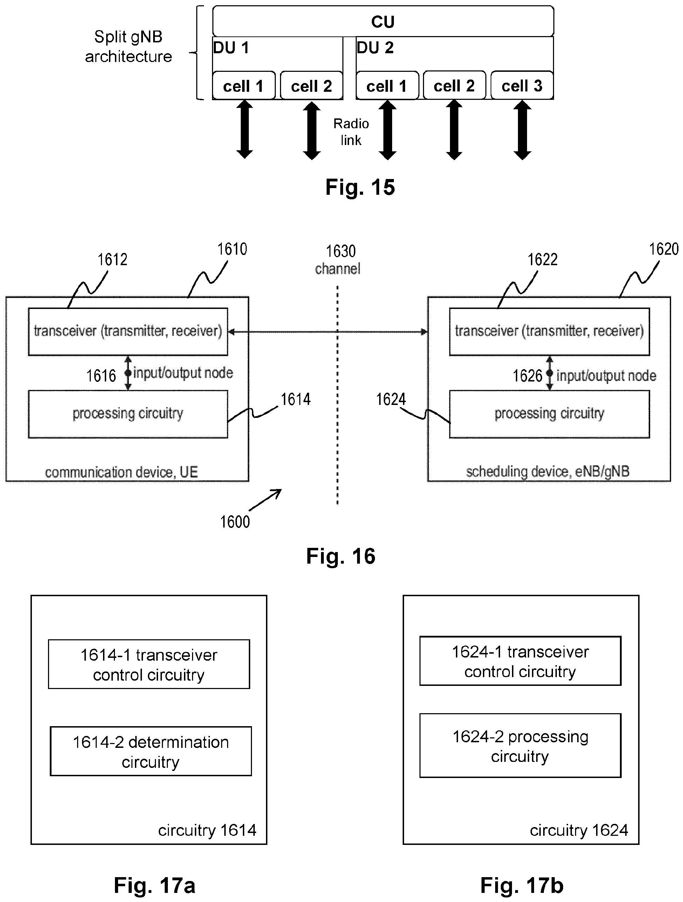

**Fig. 15** illustrates a split gNB architecture example, where a central unit (CU) controls one or more distributed units (DUs) and each of the DUs operate one or more cells. The cells communicate with the UE over radio links (RLs). A standardized F1AP interface is established between a CU and a DU to exchange control and user plane data, in a split architecture (as illustrated in **Fig. 13** and **Fig. 14** in steps S1360, S1380, S1460, and S1480). The DU may inform the cell change detection of a UE to the corresponding CU over the F1AP interface, using a new message defined for cell recovery identification and include the changed (new) cell-ID information along with this message. This new message may be referred to as 'LTM cell recovery detection' or 'LTM cell change identification' for convenience. In **Fig. 13,** the LTM cell recovery detection message is transmitted by the distributed unit gNB-DU 1310 to the central unit gNB-CU 1320 in step S1360. The LTM cell recovery detection message includes the ID of the recovered cell , which is the cell ID of cell 3 (intra-CU and intra-DU in **Fig. 13**). The gNB-CU 1320 may then use the updated COUNT as per the new cell ID to decode the RRCReconfiguration complete message (recovery completion message) that was forwarded by the gNB-DU 1310 to the gNB-CU 1320 in forgoing step S1350. Similarly, **Fig. 14** illustrates the LTM cell recovery detection message in step S1460. The LTM cell recovery detection message is transmitted from the gNB-DU2 to the gNB-CU.

Since the LTM recovery operation is typically RACH-based, UE identity is expected as part of the RACH procedure when the UE transmits 'msg-3' along with the UL RRC message (RRCReconfiguration complete). The gNB-DU may identify that the UE is transmitting on the cell for which the UE_CONTEXT has been intended on a different cell, as depicted in **Fig. 14** ("Detect cell change"). This change of cell is informed to the gNB-CU along with the RRC message received as part of LTM recovery operation.

*Further implementations*

**Fig. 16** illustrates a general, simplified and exemplary block diagram of a user equipment, UE, 910 (also termed communication device) and a base station 920 which is here exemplarily assumed to be a scheduling device like an eNB or gNB (network node). However, in general, a base station may also be a terminal in case of a sidelink connection between two terminals. Moreover, in particular with respect to the use cases of URLLC; eMBB, and mMTC, the communication device 910 may also be a sensor device, a wearable device, or a connected vehicle, or a controller of an automated machine in an industrial factory. Further, a communication device 920 may be able to function as a relay between base station and another communication device (e.g. the disclosure is not limited to communication "terminals" or user "terminals").

The UE 910 and the base station 920 (eNB/gNB) are communicating with each other over a (wireless) physical channel 930 respectively using their transceivers 912 (UE side) and 922 (base station side). Together, the base station 920 and the UE 910 may form a communication system 900. The communication system 900 may further include other entities such as further base stations or those shown in **Fig. 1.**

The UE 910 may comprise the transceiver 912 and a (processing) circuitry 914, and the scheduling device 920 may comprise the transceiver 922 and a (processing) circuitry 924. The transceiver 912, 922 in turn may comprise and/or function as a receiver and/or a transmitter. In this disclosure, in other words, the term "transceiver" is used for hardware and software components that allow the UE 910, or, respectively base station 920 to transmit and/or receive radio signals over a wireless channel 930. Accordingly, a transceiver corresponds to a receiver, a transmitter, or a combination of receiver and transmitter. Typically, a base station 920 and a UE 910 are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc.

As shown in **Fig. 16,** in some embodiments, the user equipment, UE, 1610, comprises a transceiver 1612 and circuitry 1614. The transceiver, in operation, receives from a source cell an indication to switch from the source cell to a target cell, wherein the source cell and the target cell are operated by a first base station. The circuitry, in operation, performs an attempt to switch from the source cell to the target cell, the attempt to switch including: changing a count variable to a first value; and control the transceiver to transmit, via the target cell, to the first base station a switching completion message encrypted using the first value of the count variable. Further, the circuitry, in operation, after determining a failure in the attempt to switch, performs an attempt to recover to a candidate cell out of a set of preconfigured candidate cells operated by the first base station, the attempt to recover including: setting the count variable to a second value different from the first value; and control the transceiver to transmit, via the candidate cell, to the first base station a recovery completion message encrypted using the second value of the count variable.

In some embodiments, the UE 1610 comprises a transceiver 1612, which, in operation, receives from a source cell an indication to switch from the source cell to a target cell, wherein the source cell and the target cell are operated by a first base station. The UE 1610 further comprises circuitry 1614 which, in operation, performs an attempt to switch from the source cell to the target cell, the attempt to switch including: changing a count variable to a first value; control the transceiver to transmit, via the target cell, to the first base station a switching completion message encrypted using the first value of the count variable; and setting the count variable to a second value different from the first value. Further, the circuitry, in operation, after determining a failure in the attempt to switch, performs an attempt to recover to a candidate cell out of a set of preconfigured candidate cells operated by the first base station, the attempt to recover including: controlling the transceiver to transmit, via the candidate cell, to the first base station a recovery completion message encrypted using the second value of the count variable, wherein in case the attempt to recover fails, the circuitry, in operation, initiates a new cell search.

As shown in **Fig. 16,** in some embodiments, a base station 1620 comprises a transceiver 1622 which, in operation, receives a notification from a source cell that a UE is to perform an attempt to switch from the source cell to a target cell, wherein the source cell and the target cell are operated by the base station. The base station 1620 further comprises circuitry 1624 which, in operation, changes a count variable to a first value; and control the transceiver to receive, via the target cell, a switching completion message encrypted using the first value of the count variable. Further, the circuitry, in operation, after determining a failure in the attempt to switch, sets the count variable to a second value different from the first value; and controls the transceiver to receive, via a candidate cell out of a set of preconfigured candidate cells operated by the base station, from the UE, a recovery completion message encrypted using the second value of the count variable.

In some embodiments, a base station 1620 comprises a transceiver 1622 which, in operation, receives a notification from a source cell that a UE is to perform an attempt to switch from the source cell to a target cell, wherein the source cell and the target cell are operated by the base station. The base station 1620 further comprises circuitry 1624 which, in operation, changes a count variable to a first value, controls the transceiver to receive, via the target cell, from the UE, a switching completion message encrypted using the first value of the count variable; and sets the count variable to a second value different from the first value. Further, the circuitry, in operation, after determining a failure in the attempt to switch, controls the transceiver to receive, via a candidate cell out of a set of preconfigured candidate cells operated by the base station, from the UE, a recovery completion message encrypted using the second value of the count variable, and in case the recovery completion message is not received successfully, determines a new cell search performed by the UE.

**Fig. 17a** shows a functional structure of the circuitry 1614. In particular, circuitry 1614 includes a transceiver control circuitry 1614-1. The transceiver control circuitry 1614-1, in operation, controls the transceiver 1612 to perform the operations described. Further, the circuitry 1614 includes determination circuitry 1614-2 which, in operation, performs the operations of the circuitry 1614 as described.

**Fig. 17b** shows a functional structure of the circuitry 1624. In particular, circuitry 1624 includes a transceiver control circuitry 1624-1. The transceiver control circuitry 1624-1, in operation, controls the transceiver 1622. Further, the circuitry 1614 includes processing circuitry 1614-2 which, in operation, performs operations of the circuitry 1624.

The circuitries 1614, 1624 may be one or more pieces of hardware such as one or more processors or any LSIs. Between the transceiver 1612, 1622 and the circuitry 1614, 1624 there is an input/output point (or node) 1616, 1626 over which the processing circuitry 1614, 1624, when in operation, can control the transceiver 1612, 1622, i.e. control the receiver and/or the transmitter and exchange reception/transmission data. The transceiver 1612, 1622, as the transmitter and receiver, may include the RF (radio frequency) front including one or more antennas, amplifiers, RF modulators/demodulators and the like. The circuitry 1614, 1624 may implement control tasks such as controlling the transceiver 1612, 1624 to transmit user data and control data provided by the circuitry 1614, 1624 and/or receive user data and control data that is further processed by the circuitry 1614, 1624. The circuitry 1614, 1624 may also be responsible for performing other processes such as determining, deciding, calculating, measuring, etc. The transmitter may be responsible for performing the process of transmitting and other processes related thereto. The receiver may be responsible for performing the process of receiving and other processes related thereto.

It is noted that the circuitries 1614, 1624 may be a general processing circuitry including one or more processors which may execute code instructions stored in a memory (which may be also part of the circuitry 1614, 1624) and which may include portions of the code instructions corresponding to the functionality described above with reference to respective circuitry. The functionality may be provided by hardware adaption and/or by software. The present disclosure is not limited to any particular circuitry and embodiments of the disclosure may include dedicated or programmable hardware or general purpose hardware or any combination thereof.

It is further noted that any of the steps/operations described below may be performed or controlled by the circuitry 1614 (on the UE 1610 side) and/or the circuitry 1624 (on the base station 1620 side). In particular, in the further description, the details and embodiments apply to each of the UE 1610, the base station 1620 and the methods unless explicit statement or context indicates otherwise.

It is further noted that these and other aspects may be combined with/included in the above specific embodiments of the present disclosure.

*Hardware and Software Implementation of the present disclosure*

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication (including functions of at least receiving and transmitting), which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

*Further Aspects*

According to a first aspect, provided is a user equipment comprising: a transceiver, which, in operation, receives from a source cell an indication to switch from the source cell to a target cell, wherein the source cell and the target cell are operated by a first base station; circuitry, which, in operation, performs an attempt to switch from the source cell to the target cell, the attempt to switch including: changing a count variable to a first value; and control the transceiver to transmit, via the target cell, to the first base station a switching completion message encrypted using the first value of the count variable, and after determining a failure in the attempt to switch, performs an attempt to recover to a candidate cell out of a set of preconfigured candidate cells operated by the first base station, the attempt to recover including: setting the count variable to a second value different from the first value; and control the transceiver to transmit, via the candidate cell, to the first base station a recovery completion message encrypted using the second value of the count variable.

In an embodiment, said second value of the count variable is a value correlated with an identity of said candidate cell within the set of preconfigured candidate cells.

For example, said second value of the count variable is the identity of said candidate.

For example, said second value of the count variable is a value configured for the candidate cell by the base station before receiving said indication to switch.

In an embodiment, said second value is further correlated with a first base value being the first value in case of an attempt to recover to a candidate cell operated by the first base station, and said second value is further correlated with a second base value different from the first base value in case of an attempt to recover to a candidate cell operated by a second base station different from the first base station.

In an embodiment, the circuitry, in operation, after determining that the attempt to recover to the candidate cell was successful, changes the count variable to a third value which is calculated based on the maximum value of identity of a candidate cell among identities of respective candidate cells within the set of preconfigured candidate cells.

In an embodiment, the second value of the count variable is a constant common for all the candidate cells within the set of preconfigured candidate cell, the constant being an integer greater than zero, and the circuitry, in operation, performs only a single attempt to recover to a candidate cell before initiating a new cell search.

For example, the constant is a fixed value specified by a convention or a value configured by the first base station before receiving said indication to switch.

For example, the circuitry, in operation, after determining that the attempt to recover to the candidate cell was successful, changes the count variable to a fourth value which is obtained by incrementing the second value.

For example, the circuitry, in operation, after determining that the attempt to recover to the candidate cell was successful, changes the count variable to a fifth value which is a fixed value specified by a convention or a value configured by the first base station before receiving said indication to switch.

Further provided is a handover method for a user equipment, the method comprising: receiving from a source cell an indication to switch from the source cell to a target cell, wherein the source cell and the target cell are operated by a first base station; performing an attempt to switch from the source cell to the target cell, the attempt to switch including: changing a count variable to a first value; and control the transceiver to transmit, via the target cell, to the first base station a switching completion message encrypted using the first value of the count variable, and after determining a failure in the attempt to switch, performing an attempt to recover to a candidate cell out of a set of preconfigured candidate cells operated by the first base station, the attempt to recover including: setting the count variable to a second value different from the first value; and controlling the transceiver to transmit, via the candidate cell, to the first base station a recovery completion message encrypted using the second value of the count variable.

According to a second aspect, provided is a user equipment comprising: a transceiver, which, in operation, receives from a source cell an indication to switch from the source cell to a target cell, wherein the source cell and the target cell are operated by a first base station; circuitry, which, in operation, performs an attempt to switch from the source cell to the target cell, the attempt to switch including: changing a count variable to a first value; control the transceiver to transmit, via the target cell, to the first base station a switching completion message encrypted using the first value of the count variable; and setting the count variable to a second value different from the first value; and after determining a failure in the attempt to switch, performs an attempt to recover to a candidate cell out of a set of preconfigured candidate cells operated by the first base station, the attempt to recover including: controlling the transceiver to transmit, via the candidate cell, to the first base station a recovery completion message encrypted using the second value of the count variable, wherein in case the attempt to recover fails, the circuitry, in operation, initiates a new cell search.

In an embodiment of the first aspect and second aspect, the indication to switch is provided from the serving cell on Medium Access Control, MAC, layer, the encryption is performed on Packet Data Convergence Protocol, PDCP, and the completion message is transmitted to the first base station via Radio Resource Control, RRC.

Moreover, a method of handover for a user equipment is provided, comprising: receiving from a source cell an indication to switch from the source cell to a target cell, wherein the source cell and the target cell are operated by a first base station; performing an attempt to switch from the source cell to the target cell, the attempt to switch including:

changing a count variable to a first value; controlling the transceiver to transmit, via the target cell, to the first base station a switching completion message encrypted using the first value of the count variable; and setting the count variable to a second value different from the first value; and after determining a failure in the attempt to switch, performing an attempt to recover to a candidate cell out of a set of preconfigured candidate cells operated by the first base station, the attempt to recover including controlling the transceiver to transmit, via the candidate cell, to the first base station a recovery completion message encrypted using the second value of the count variable, wherein in case the attempt to recover fails, the circuitry, in operation, initiates a new cell search.

According to a third aspect, provided is a base station comprising: a transceiver, which, in operation, receives a notification from a source cell that a UE is to perform an attempt to switch from the source cell to a target cell, wherein the source cell and the target cell are operated by the base station; circuitry, which, in operation, changes a count variable to a first value; and control the transceiver to receive, via the target cell, a switching completion message encrypted using the first value of the count variable, and after determining a failure in the attempt to switch, sets the count variable to a second value different from the first value; and controls the transceiver to receive, via a candidate cell out of a set of preconfigured candidate cells operated by the base station, from the UE, a recovery completion message encrypted using the second value of the count variable.

Furthermore, a method of a handover is provided for a base station, the method comprising: receiving a notification from a source cell that a UE is to perform an attempt to switch from the source cell to a target cell, wherein the source cell and the target cell are operated by the base station; changing a count variable to a first value; and controlling the transceiver to receive, via the target cell, a switching completion message encrypted using the first value of the count variable, and after determining a failure in the attempt to switch, (i) setting the count variable to a second value different from the first value; and (ii) receiving, via a candidate cell out of a set of preconfigured candidate cells operated by the base station, from the UE, a recovery completion message encrypted using the second value of the count variable.

According to a fourth aspect, provided is a base station comprising: a transceiver, which, in operation, receives a notification from a source cell that a UE is to perform an attempt to switch from the source cell to a target cell, wherein the source cell and the target cell are operated by the base station; circuitry, which, in operation, changes a count variable to a first value, control the transceiver to receive, via the target cell, from the UE, a switching completion message encrypted using the first value of the count variable; and setting the count variable to a second value different from the first value, after determining a failure in the attempt to switch, controls the transceiver to receive, via a candidate cell out of a set of preconfigured candidate cells operated by the base station, from the UE, a recovery completion message encrypted using the second value of the count variable, and in case the recovery completion message is not received successfully, determines a new cell search performed by the UE.

Furthermore, a method of a handover is provided for a base station, the method comprising: receiving a notification from a source cell that a UE is to perform an attempt to switch from the source cell to a target cell, wherein the source cell and the target cell are operated by the base station; changing a count variable to a first value, controlling the transceiver to receive, via the target cell, from the UE, a switching completion message encrypted using the first value of the count variable; and setting the count variable to a second value different from the first value, after determining a failure in the attempt to switch, controlling the transceiver to receive, via a candidate cell out of a set of preconfigured candidate cells operated by the base station, from the UE, a recovery completion message encrypted using the second value of the count variable, and in case the recovery completion message is not received successfully, determines a new cell search performed by the UE.

Moreover, a computer program is provided stored on a non-transitory medium and comprising code instructions which when executed on one or more processors, cause the one or more processor to perform any of the above mentioned methods.

Still further, an integrated circuit, IC, is provided that embodies the circuitry mentioned in the above aspects, examples, or embodiments. The IC may but does not have to comprise the transceiver (receiver / transmitter). It may comprise an interface (port) for connecting with a transceiver and for receiving/transmitting data from/to the transceiver.

**Claims**

1. A user equipment comprising:

   a transceiver, which, in operation, receives from a source cell an indication to switch from the source cell to a target cell, wherein the source cell and the target cell are operated by a first base station;
   circuitry, which, in operation,
   performs an attempt to switch from the source cell to the target cell, the attempt to switch including:

      - changing a count variable to a first value; and

- control the transceiver to transmit, via the target cell, to the first base station a switching completion message encrypted using the first value of the count variable, and

after determining a failure in the attempt to switch, performs an attempt to recover to a candidate cell out of a set of preconfigured candidate cells operated by the first base station, the attempt to recover including:

- setting the count variable to a second value different from the first value; and
- control the transceiver to transmit, via the candidate cell, to the first base station a recovery completion message encrypted using the second value of the count variable.

2. The user equipment according to claim 1, wherein said second value of the count variable is a value correlated with an identity of said candidate cell within the set of preconfigured candidate cells.

3. The user equipment according to claim 2, wherein said second value of the count variable is the identity of said candidate cell.

4. The user equipment according to claim 2, wherein said second value of the count variable is a value configured for the candidate cell by the base station before receiving said indication to switch.

5. The user equipment according to any of claims 1 to 4, wherein

said second value is further correlated with a first base value being the first value in case of an attempt to recover to a candidate cell operated by the first base station, and
said second value is further correlated with a second base value different from the first base value in case of an attempt to recover to a candidate cell operated by a second base station different from the first base station.

6. The user equipment according to any of claims 1 to 5, wherein
the circuitry, in operation, after determining that the attempt to recover to the candidate cell was successful, changes the count variable to a third value which is calculated based on the maximum value of identity of a candidate cell among identities of respective candidate cells within the set of preconfigured candidate cells.

7. The user equipment according to claim 1, wherein

the second value of the count variable is a constant common for all the candidate cells within the set of preconfigured candidate cell, the constant being an integer greater than zero, and
the circuitry, in operation, performs only a single attempt to recover to a candidate cell before initiating a new cell search.

8. The user equipment according to claim 7, wherein the constant is a fixed value specified by a convention or a value configured by the first base station before receiving said indication to switch.

9. The user equipment according to claim 7 or 8, wherein the circuitry, in operation, after determining that the attempt to recover to the candidate cell was successful, changes the count variable to a fourth value which is obtained by incrementing the second value.

10. The user equipment according to claim 7 or 8, wherein the circuitry, in operation, after determining that the attempt to recover to the candidate cell was successful, changes the count variable to a fifth value which is a fixed value specified by a convention or a value configured by the first base station before receiving said indication to switch.

11. A user equipment comprising:

a transceiver, which, in operation, receives from a source cell an indication to switch from the source cell to a target cell, wherein the source cell and the target cell are operated by a first base station;
circuitry, which, in operation,
performs an attempt to switch from the source cell to the target cell, the attempt to switch including:

- changing a count variable to a first value;
- control the transceiver to transmit, via the target cell, to the first base station a switching completion message encrypted using the first value of the count variable; and
- setting the count variable to a second value different from the first value; and

after determining a failure in the attempt to switch, performs an attempt to recover to a candidate cell out of a set of preconfigured candidate cells operated by the first base station, the attempt to recover including:

- controlling the transceiver to transmit, via the candidate cell, to the first base station a recovery completion message encrypted using the second value of the count variable,

wherein in case the attempt to recover fails, the circuitry, in operation, initiates a new cell search.

12. The user equipment according to any of claims 1 to 11, wherein

the indication to switch is provided from the serving cell on Medium Access Control, MAC, layer,
the encryption is performed on Packet Data Convergence Protocol, PDCP, and
the completion message is transmitted to the first base station via Radio Resource Control, RRC.

13. A base station comprising:

a transceiver, which, in operation, receives a notification from a source cell that a UE is to perform an attempt to switch from the source cell to a target cell, wherein the source cell and the target cell are operated by the base station;
circuitry, which, in operation,
changes a count variable to a first value; and control the transceiver to receive, via the target cell, a switching completion message encrypted using the first value of the count variable, and
after determining a failure in the attempt to switch,

- sets the count variable to a second value different from the first value; and
- controls the transceiver to receive, via a candidate cell out of a set of preconfigured candidate cells operated by the base station, from the UE, a recovery completion message encrypted using the second value of the count variable.

14. A base station comprising:

a transceiver, which, in operation, receives a notification from a source cell that a UE is to perform an attempt to switch from the source cell to a target cell, wherein the source cell and the target cell are operated by the base station;
circuitry, which, in operation,

- changes a count variable to a first value,
- control the transceiver to receive, via the target cell, from the UE, a switching completion message encrypted using the first value of the count variable; and
- setting the count variable to a second value different from the first value,

after determining a failure in the attempt to switch,
controls the transceiver to receive, via a candidate cell out of a set of preconfigured candidate cells operated by the base station, from the UE, a recovery completion message encrypted using the second value of the count variable, and
in case the recovery completion message is not received successfully, determines a new cell search performed by the UE.

15. A handover method for a user equipment, the method comprising:

receiving from a source cell an indication to switch from the source cell to a target cell, wherein the source cell and the target cell are operated by a first base station;
performing an attempt to switch from the source cell to the target cell, the attempt to switch including:

- changing a count variable to a first value; and

- control the transceiver to transmit, via the target cell, to the first base station a switching completion message encrypted using the first value of the count variable, and

after determining a failure in the attempt to switch, performing an attempt to recover to a candidate cell out of a set of preconfigured candidate cells operated by the first base station, the attempt to recover including:

- setting the count variable to a second value different from the first value; and
- controlling the transceiver to transmit, via the candidate cell, to the first base station a recovery completion message encrypted using the second value of the count variable.

**Fig. 1**

**Fig. 2**

310

300

UE

gNB

DU/ Cell-1    DU/ Cell-2    DU/ Cell-3

312           314           316

S305

LTM candidate cell configuration
[cell-2, cell-3]

Cell switch
decision

Cell switch MAC CE  S300
[cell switch to cell-2]

S310

Initiate cell switch to cell-2,
start LTM supervisor timer

Packet loss

LTM cell switch   S320
[RRCReconfiguration complete]

S330    LTM supervisor
timer expiry

S340    Detected LTM cell
switch failure

**Fig. 3**

300

① Cell switch command

② Cell handover

③ Cell recovery if handover fails

Source cell 312

Target cell 314

Candidate cell 316

Fig. 4

Fig. 5

Transmitter                                    Receiver

Fig. 6

**300**
UE

**310**
gNB

DU/ Cell-1    DU/ Cell-2    DU/ Cell-3
**312**          **314**          **316**

LTM candidate cell configuration
[cell-2, cell-3]

Cell switch
decision

**S300**
Cell switch MAC CE
[cell switch to cell-2]

**S310**
Initiate cell switch to cell-2
[last used PDCP
**COUNT=(n-1)** at UL SRB1]

Packet loss

LTM cell switch    **S320**
[RRCReconfiguration complete
with **COUNT=(n)**]

**S330**
• Cell switch failure detection
  (RLF or timer expiry)
• Restored source cell
  configurations. This includes
  PDCP COUNT value.
• Attempt recovery to cell-3

COUNT=(n)
reused

LTM cell recovery    **S340**
[RRCReconfiguration complete
with **COUNT=(n)**]

**Fig. 7**

Fig. 8

## LTM config

...

### Candidate cell-1 config

- ...
- candidate ID,
- cellSeqCount,
- RRCReconfiguration

### Candidate cell-2 config

- ...
- candidate ID,
- cellSeqCount,
- RRCReconfiguration

...

**Fig. 9**

310

320

gNB - 1

gNB - 2

LTM candidate cells configured at UE

| Cell 1 | Cell 2 | Cell 3 | ... | Cell N |
| Seq-1 | Seq-2 | Seq-3 | | Seq-N |

Cell N+1

Max number of configured candidate cells 'N'

**Fig. 10**

**LTM config**

○ …
○ seqConst

**Candidate cell-1 config**
- …
- candidate ID
- RRCReconfiguration

**Candidate cell-2 config**
- …
- candidate ID
- RRCReconfiguration

○ …

**Fig. 11**

310

gNB

300

UE | Cell-1 | Cell-2 | Cell-3 | Cell-4

312 | 314 | 316 | 318

S1205

LTM configuration with intra-CU candidate cells
[cell-2, cell-3, cell-4]

Cell switch
decision

S1200
Cell switch command [cell-2]

Cell-2 SRB1 re-configured from
source SRB1 Parameters

Attempt cell switch   S1210
[RRCReconfiguration complete on
SRB1]

Packet
loss

✕

Detect cell switch failure.
Discard cell-2 SRB1        S1220

Select candidate cell-3 for recovery.
Use seqConst = 1            S1230

Cell-3 SRB1 reconfigured from source
SRB1 and initialize new TX_NEXT value   S1240

Attempt cell recovery    S1250
[RRCReconfiguration complete on
SRB1]

Fig. 12

Fig. 13

**Fig. 14**

EP 4 604 614 A1

CU

Split gNB architecture

DU 1

cell 1 | cell 2

DU 2

cell 1 | cell 2 | cell 3

Radio link

## Fig. 15

1612 | 1610 | 1630 channel | 1622 | 1620

transceiver (transmitter, receiver)

1616 input/output node

processing circuitry

1614

communication device, UE

transceiver (transmitter, receiver)

1626 input/output node

processing circuitry

1624

scheduling device, eNB/gNB

1600

## Fig. 16

1614-1 transceiver control circuitry

1614-2 determination circuitry

circuitry 1614

## Fig. 17a

1624-1 transceiver control circuitry

1624-2 processing circuitry

circuitry 1624

## Fig. 17b

Europäisches
Patentamt

European
Patent Office

Office européen
des brevets

# EUROPEAN SEARCH REPORT

**Application Number**

EP 24 15 8421

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANIL AGIWAL ET AL: "Handling keystream reuse at recovery", 3GPP DRAFT; R2-2400197; TYPE DISCUSSION; NR_MOB_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Athens, GR; 20240226 - 20240301 17 February 2024 (2024-02-17), XP052560715, Retrieved from the Internet: URL:https://www.3gpp.org/ftp/TSG_RAN/WG2_RL2/TSGR2_125/Docs/R2-2400197.zip R2-2400197_Handling keystream reuse at recovery.doc [retrieved on 2024-02-17] * section 2 * | 1,11, 13-15 | INV. H04W36/00 H04W12/037 |
| | ----- | | **TECHNICAL FIELDS SEARCHED (IPC)** |
| A | FUJITSU: "Failure detection and fast recovery", 3GPP DRAFT; R2-2306051, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Incheon, Korea; 20230522 - 20230526 12 May 2023 (2023-05-12), XP052390796, Retrieved from the Internet: URL:https://ftp.3gpp.org/tsg_ran/WG2_RL2/TSGR2_122/Docs/R2-2306051.zip R2-2306051_failure_recovery.docx [retrieved on 2023-05-12] * Observation 1 * | 1-15 | H04W |
| | ----- | | |

The present search report has been drawn up for all claims

| Place of search | Date of completion of the search | Examiner |
|---|---|---|
| Munich | 3 July 2024 | Straniero, Roberto |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................

& : member of the same patent family, corresponding
document

EPO FORM 1503 03.82 (P04C01)